# EUROPEAN PATENT SPECIFICATION

(11) **EP 1 219 412 B1**
(45) Date of publication and mention of the grant of the patent: **29.06.2011**
(21) Application number: 00949975.7
(22) Date of filing: 03.08.2000
(51) Int. Cl.: B32B 27/32, B32B 27/00

(54) **MULTILAYERED STRETCHED RESIN FILM**
MEHRSCHICHTIGE GESTRECKTE HARZFOLIE
FILM MULTICOUCHE EN RESINE ETIRÉ

(30) Priority: 04.08.1999 JP 22112799
(43) Date of publication of application: 03.07.2002
(73) Proprietor: Yupo Corporation, Tokyo 101-0062 (JP)
(72) Inventor: ISHIGE, Atsushi, Yupo Corporation, Kashima-gun, Ibaraki 311-1400 (JP); KITAMURA, Kazuhisa, Yupo Corporation, Kashima-gun, Ibaraki 311-1400 (JP)
(74) Representative: Vossius & Partner
(86) International application number: PCT/JP2000/005212
(87) International publication number: WO 2001/010642

(56) References cited:
- EP-A- 0 501 441
- EP-A- 0 666 183
- EP-A- 0 845 490
- EP-A- 0 855 420
- EP-A- 1 174 262
- JP-A- 8 281 885
- JP-A- 53 045 389
- JP-A- 2000 289 156
- DATABASE WPI Section Ch, Week 199709 Derwent Publications Ltd., London, GB; Class A18, AN 1997-095534 XP002216673 & JP 08 333466 A (TORAY IND INC), 17 December 1996 (1996-12-17)

## Description

### Field of the Invention

The present invention relates to a multi-layered stretched resin film which is resistant to becoming waved or curled due to contact with the vehicle of offset printing inks during offset printing, and thus has an excellent printing properties. The multi-layered stretched resin film of the present invention may be used as a material for tracing paper, maps, book covers, wrapping paper, book paper, sticker sheets, poster paper, menu sheets, hanging screens, labels, shopping bags, cardboard, brochures, illuminated sign board and so forth.

### Description of the Background

Synthetic paper has been proposed and put into practical use in recent years to replace conventional natural pulp-made paper. The synthetic paper comprises a base layer made of a biaxially stretched polypropylene film containing 5 to 40 wt% of an inorganic fine powder, and paper-like layers disposed on the top and bottom surfaces thereof, made of a uniaxially stretched polypropylene film containing 8 to 65 wt% of an inorganic fine powder (e.g., as described in United States Patent No. 4,318,950. Japanese Examined Patent Publication Nos. 46-40794, 60-36173 and 62-35412).

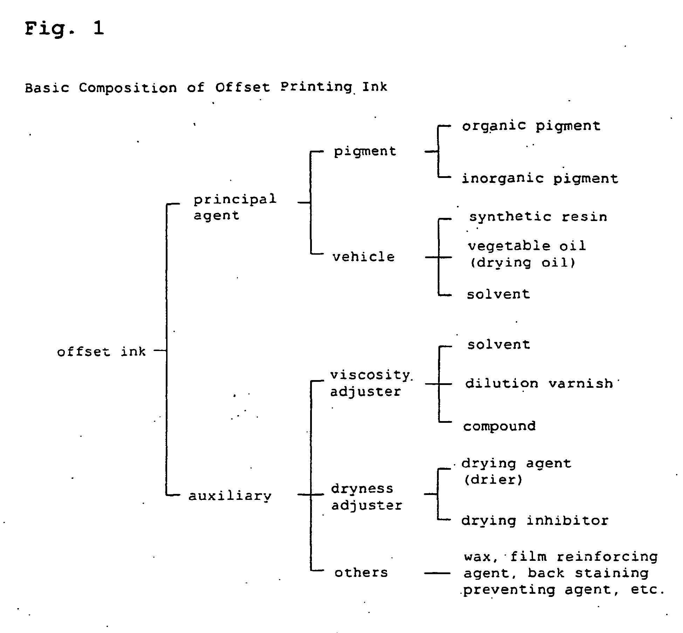

Offset printing, (i.e., lithography), is generally used for printing on paper, polyethylene terephthalate film, polyamide film, coated paper and the like, since this technique can readily provide multi-color printing. The typical composition of a general-purpose, dry-type offset printing ink is shown in Fig. 1 and Table 1 below.

**Table 1 Composition of Offset Printing Ink (weight part)**

| | Ink for sheet printing | Ink for non-paper printing | Ink for rotary offset press |
|---|---|---|---|
| Pigment | 25 | 25 | 25 |
| Resin | 25 | 30 | 25 |
| Drying oil | 20 | 34 | 10 |
| High-boiling-point, petroleum-based solvent | 25 | 5 | 36 |
| Drier | 1 | 2 | - |
| Others | 4 | 4 | 4 |
| Total | 100 | 100 | 100 |

The vehicle shown in Fig. 1 refers to a liquid component among various components composing printing ink, and is responsible for dispersing pigment to thereby keep fluidity of the ink; for ensuring smooth movement of the ink from an ink pot to a printing plane after being transferred among individual rollers, plate and blanket; and for fixing the pigment onto the printing plane through solidification after printing. In response to recent strong requirement to shorten the drying time of the offset printing ink for more rapid printing, there is an increasing trend of using quick-drying ink having compounded therein a vehicle which mainly comprises a drying oil added with resin and mineral oil (high-boiling-point, petroleum-based solvent).

Printing with such quick-drying offset printing ink on the synthetic paper comprising a stretched polyolefinic film or such film compounded with an inorganic fine powder, however, undesirably swells the polyolefin *per se* due to the vehicle contained in the quick-drying offset printing ink to thereby produce local surface waving or curling of the printed film, which has been an obstacle for the practical use. So that the conventional offset printing ink for polyolefinic film has been such that having a special formula free from mineral oil at the sacrifice of the quick-drying property.

Such special offset printing ink for polyolefinic film, however, requires long drying time and has been only available in limited printing works and manufacturers, so that there has been a strong need for a new polyolefinic film on which the general-purpose offset printing ink of oxidation polymerization type (drying oil type) is available.

That is, in the general printing works, offset printing is practiced on pulp-based paper such as wood free paper and coated paper using generally-commercialized, quick-drying ink, so that printing on the polyolefinic film or synthetic paper requires temporary replacement of such ink with the special offset printing ink suitable for such non-absorbent material. Such replacement of the ink is, however, considerably time- and labor-consuming, so that the general printing works have not been positive about printing on the polyolefinic film or synthetic paper, which has been one factor obstructing the generalization of the polyolefinic film or synthetic paper in offset printing.

One approach has been made (Laid-Open Japanese Patent Publication No. 8-333466), in which a polyolefinic resin added with an amorphous resin is used as a part of the multi-layered film. Such technique is, however, still not successful in solving the problem of swelling of the film as a whole (referred-to as "solvent attack" hereinafter) due to vehicle (in particular high-boiling-point, petroleum-based solvent such as mineral oil) contained in the offset printing ink.

In document EP-A-845 490 a porous molded article is described having microvoids therein which comprises a stretched product of a resin molded material made up of, as the base material, an olefinic resin composition containing from 95 to 50% by weight of a crystalline olefinic resin component and from 5 to 50% by weight of a polymer of a cyclic olefin having a weight average molecular weight of not less than 1,000 and less than 10,000 and a glass transition point of from 180 to 400°C component.

EP-A-666 183 describes a specific thermoplastic resin film comprising a support layer comprising a thermoplastic resin film and a pigment coating layer provided on the front surface of said support layer or both the front surface and back surface of said support layer, wherein said thermoplastic resin film contains 1 to 30% by weight of petroleum resin.

In document EP-A-1 174 262, which is prior art according to Art. 54(3) EPC, a multilayered stretched resin film is disclosed which comprises a base layer containing 40 to 90 wt% of a polyolefinic resin and 10 to 60 wt% of an inorganic fine powder or an organic filler and an amorphous resin-containing layer provided on at least one side of such base layer and containing 0 to 85 wt% of a polyolefinic resin and 15 to 100 wt% of an amorphous resin, wherein the amorphous resin-containing layer has a porosity of 5% or below.

EP-A-855 420 discloses a specific synthetic paper comprising a stretched resin film being obtained by stretching a resin film having as a support a resin composition which comprises from 30 to 80 % by weight of a crystalline polyolefin resin and from 70 to 20 % by weight of milled calcium carbonate particles.

EP-A-501 441 refers to a synthetic paper comprising a finely porous polyolefin film layer having an opacity of at least 80% obtainable by stretching a polyolefin film containing from 8 to 65% by weight of an inorganic fine powder, a stretched ethylene-vinyl alcohol copolymer film layer on one or both sides of the polyolefin film layer; and a coat layer on at least one of the stretched ethylene-vinyl alcohol copolymer film layers.

JP-A-08-333466 discloses a biaxially stretched white film obtained by forming a layer of a carboxylated polyolefin resin having a glossiness of 60 % or higher and a wet tension of 35 dyne/cm or higher on a film comprising 55 to 93 wt.% crystalline polypropylene, 5 to 30 wt.% amorphous polyolefin, and 2 to 15 wt.% polyolefin having a melting point of 140°C or lower.

Document JP-A-53045389 describes methods for producing biaxially stretched polypropylene multi-layered films having protected printed surfaces.

JP-A-08-281885 discloses a polyolefinic laminated film having at least one surface layer composed of a resin composition consisting of 50 to 99 wt.% of a crystalline propylene polymer wherein the molecular weight distribution (Mw/Mn) represented by a ratio of a weight average molecular weight (Mw) and a number average molecular weight (Mn) is 2.5 to 4.0.

It is therefore an object of the present invention to provide a multi-layered stretched resin film having an excellent printing property, which is less causative of surface waving or entire curling even if the film is subjected to offset printing using a general-purpose, quick-drying offset printing ink.

### Disclosure of the Invention

The present inventors found out after extensive investigations for solving the foregoing problems that adding an amorphous resin in a proper ratio to the surface layer of a thermoplastic resin film, and stretching such layer so as to substantially prevent voids from being formed can successfully provide a multi-layered stretched resin film excellent in printing property.

The present invention is to provide a multi-layered stretched resin film which comprises a base layer (A) containing a polyolefinic resin in an amount of more than 90 wt% and 100 wt% or less, and an inorganic fine powder having an average grain size of 0.01 to 10 µm or an organic filler in an amount of 0 wt% or more and less than 10 wt%; and an amorphous resin-containing layer (B) provided at least on one side of such base layer (A), and containing 0 to 85 wt% of a polyolefinic resin and 15 to 100 wt% of an amorphous resin; wherein such amorphous resin-containing layer (B) has a porosity of 5% or below.

The multi-layered stretched resin film of the present invention is particularly preferable when it further comprises a surface layer (C) containing 30 to 85 wt% of a polyolefinic resin and 15 to 70 wt% of an inorganic fine powder or an organic filler, and when the surface layer (C) is provided at least on one side of the foregoing stack which comprises the base layer (A) and the amorphous resin-containing layer (E) provided at least on one side thereof.

It should now be noted that, in this specification, any notation for numerical range using a word "to" indicates a range defined by values placed before and after "to", where both ends are inclusive as minimum and maximum values.

### Brief Description of the Drawings

The above and other objects and features of the invention are apparent to those skilled in the art from the following referred embodiments thereof when considered in conjunction with the accompanied drawings, in which:
Fig. 1 shows a chart showing a basic composition of offset printing ink; and

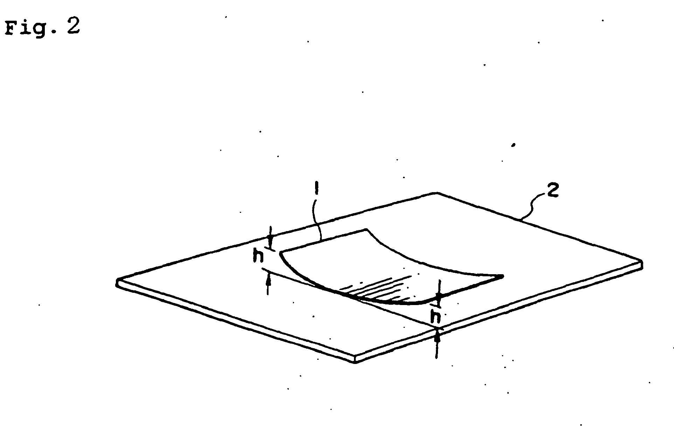

Fig. 2 is a schematic view explaining a curl height, where reference numeral 1 represents a printed matter, 2 represents a flat table, and h represents curl height.

### Detailed Description of the Invention

The multi-layered stretched resin film of the present invention will be detailed hereinafter. The multi-layered stretched resin film of the present invention comprises a base layer (A) and an amorphous resin-containing layer (B) provided at least on one side thereof, and more preferably, further comprises a surface layer (C) at least on one side of such stack. The multi-layered stretched resin film of the present invention can be such that it further optionally comprises an intermediate layer (D) between the base layer (A) and amorphous resin-containing layer (B) or between the base layer (A) and surface layer (C). The following description will then go through the base layer (A), amorphous resin-containing layer (B), surface layer (C) and intermediate layer (D) in this order, which will be followed by description of a method for producing such multi-layered stretched resin film.

### Base Laver (A)

The base layer (A) of the multi-layered stretched resin film of the present invention contains a polyolefinic resin in an amount of more than 90 wt% and 100 wt% or less, and an inorganic fine powder having an average grain size of 0.01 to 10 µm or an organic filler in an amount of 0 wt% or more and less than 10 wt%.

There is no special limitation on the species of the polyolefinic resin used for the base layer (A).

Examples of such polyolefinic resins include homopolymer of C₂₋₈ α-olefins such as ethylene, propylene, 1-butene, 1-hexene, 1-heptene, 1-octene, 4-methyl-1-pentene and 3-methyl-1-pentene; and copolymers of 2 to 5 species selected from such α -olefins. Either random copolymer or block copolymer is allowable. More specifically, allowable are branched or normal polyethylene having a density of 0.89 to 0.97 g/cm³ and a melt flow rate (190°C 2.16 kg load) of 1 to 10 g /10 minutes; and polymers having a melt flow rate (230°C, 2.16 kg load) of 0.2 to 20 g /10 minutes such as propylene homopolymer, (4-methyl-1-pentene) homopolymer, propylene-ethylene copolymer, propylene-(1-butene) copolymer, propylene-ethylene-(1-butene) copolymer, propylene-(4-methyl-1-pentene) copolymer, propylene-(3-methyl-1-pentene) copolymer, poly(1-butene), poly(4-methyl-1-pentene) and propylene-ethylene-(3-methyl-1-pentene) copolymer. Among these, propylene homopolymer, propylene-ethylene random copolymer and high-density polyethylene are preferable in terms of inexpensiveness and formability.

The polyolefinic resin used for the base layer (A) preferably has a melting point (peak temperature in a DSC curve) of 130 to 210°C. In particular, propylene homopolymer having a melting point (peak temperature in a DSC curve) of 155 to 174°C, a melt flow rate (JIS K-7210) of 0.5 to 10 g/10 minutes and a crystallinity of 45 to 70% is preferable. For the base layer (A), a single species may be selected from the above polyolefinic resins for independent use, or two or more species may be selected therefrom for combined use.

The inorganic fine powder used for the base layer (A) has an average grain size of 0.01 to 10 µm, and preferably 0.05 to 8 µm. The organic filler used for the base layer (A) preferably has an average dispersion grain size of 0.01 to 10 µm, and more preferably 0.05 to 8 µm.

Examples of the inorganic finepowder include heavy calcium carbonate, precipitated calcium carbonate, fired clay, talc, titanium oxide, barium sulfate, aluminum sulfate, silica, zinc oxide, magnesium oxide and diatom earth. Surface modified products of such inorganic fine powder are also available. Among these, heavy calcium carbonate, precipitated calcium carbonate, surface modified products of such calcium carbonates, clay and diatom earth are preferable in terms of inexpensiveness and void forming property in the stretching.

The organic filler is exemplified by polyethylene terephthalate, polybutylene terephthalate, polyamide, polycarbonate, polyethylene naphthalate, polystyrene, melamine resin, cyclopolyolefin, polyethylene sulfite, polyimide, polyethyl ether ketone and polyphenylene sulfite. Among these, incompatible organic fillers having a higher melting point or glass transition temperature than that of the polyolefinic resin to be combined therewith are preferable in terms of void formation.

For the base layer (A), a single species of the inorganic fine powder or the organic filler may be selected from the above for independent use, or two or more species may be selected therefrom for combined use. The case of combined use of two or more species also permits mixed use of the organic filler and the inorganic fine powder.

As for the blend ratio of the polyolefinic resin and the inorganic fine powder or organic filler in the base layer (A), the polyolefinic resin accounts for more than 90 wt% and 100 wt% or less, and the inorganic fine powder or organic filler accounts for 0 wt% or more and less than 10 wt%. More preferable blend ratio is 92 to 99.5 wt% for the polyolefinic resin, and 0.5 to 8 wt% for the inorganic fine powder or organic filler. Still more preferable blend ratio is 94 to 99 wt% for the polyolefinic resin, and 1 to 6 wt% for the inorganic fine powder or organic filler.

The base layer (A) may have voids, and the porosity thereof is preferably 0 to 9%. The porosity of the base layer (A) is now referred to as a ratio of sectional area of voids in the base layer (A) determined by observing a section of the multi-layered stretched resin film under a scanning electron microscope. The voids can be produced by stretching, where both of uniaxial stretching and biaxial stretching are allowable.

The thickness of the base layer (A) is preferably 20 to 250 µm, and is more preferably 30 to 200 µm.

### Amorphous Resin-Containing Layer (B)

The amorphous resin-containing layer (B) of the multi-layered stretched resin film of the present invention contains 0 to 85 wt% of a polyolefinic resin and 15 to 100 wt% of an amorphous resin.

There is no special limitation on the species of the polyolefinic resin used for the amorphous resin-containing layer (B), and those listed in the above for the base layer (A) are available. In particular, propylene homopolymer, high-density polyethylene and mixture thereof are preferable. More specifically, propylene homopolymer havingameltingpoint (peak temperature in a DSC curve) of 155 to 174°C, a melt flow rate (JIS K-7210) of 0.5 to 20 g/10 minutes and a crystallinity of 45 to 70% is preferably used. Another preferable example available therefor is high-density polyethylene having a melting point (peak temperature in a DSC curve) of 120 to 135°C, a melt flow rate (JIS K-6760) of 0.2 to 20 g/10 minutes, a crystallinity of 65 to 95%, and a density of 0.945 g/cm³ or above. The polyolefinic resin used for the amorphous resin-containing layer (B) may be a single species selected from the above for individual use, or two or more species for combined use.

The amorphous resin for use in the amorphous resin-containing layer (B) is preferably such that having a glass transition temperature of 170°C or below, and more preferably 70 to 170°C. A glass transition temperature of the amorphous resin lower than 70°C tends to result in adhesion of the film onto rolls and thus ruins the formability of the film, and that higher than 170°C tends to result in excessive formation of the voids during the stretching to thereby raise the porosity, which is disadvantageous in that effectively preventing the solvent attack. When the multi-layered stretched resin film of the present invention is produced, the stretching temperature is preferably set at a temperature higher by 10°C or more than the glass transition temperature of the amorphous resin.

Such amorphous resin is typically exemplified as cycloolefinic resin, atactic polystyrene, petroleum resin, polycarbonate or acrylic resin. These resins may be used individually or in any combinations of two or more thereof.

Among these, cycloolefinic resin is particularly preferable. The cycloolefinic resin is preferably any one resin selected from the group consisting of ring-opened polymers derived from cycloolefinic monomer expressed by general formula (1) below; hydrogenated compounds of such polymers or copolymers; and addition polymers of cycloolefinic monomer expressed by the general formula (1) and ethylene: 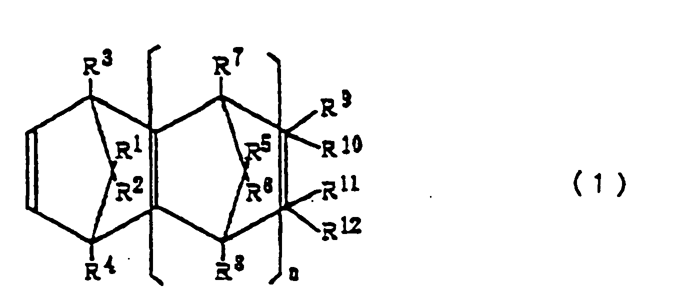 where, "n" denotes 0 or a positive integer, R¹ to R¹² independently represents an atom or a functional group selected from the group comprising hydrogen atom, halogen atom and hydrocarbon groups, R⁹ to R¹² may be bound with each other to form a monocyclic or polycyclic group, where such monocyclic or polycyclic group may have a double bond, and R⁹ and R¹⁰, or R¹¹ and R¹² together may form an alkylidene group.

As such cycloolefinic monomer, already known monomers disclosed for example in Japanese Laid-Open Patent Publication Nos. 2-227424, 2-276842, 5-97719, 7-41550 and 8-72210 are available. Specific examples of such cycloolefinic monomer include bicyclo[2.2.1]hepto-2-ene derivatives,
tetracyclo[4.4.0.1^{2,5}.1^{7,10}]-3-dodecene derivatives,
hexacyclo[6.6.1.1^{3,6}1.^{10,13}.0^{2.7}.0^{9,14}]-4-heptadecene derivatives,
octacyclo[8.8 .0.1^{2.9}.1^{4.7}.1^{11.18}.1^{13.16}.0^{3.8}.0^{12.17}]-5-docosene derivatives,
pentacyclo[6.6.1.1^{3.6}.0^{2.7}.0^{9.14}]-4-hexadecene derivatives,
heptacyclo-5-eicosene derivatives, heptacyclo-5-heneicosene derivatives,
tricyclo[4.3.0.1^{2.5}]-3-decene derivatives,
tricyclo[4.40.1^{2.5}]-3-undecene derivatives,
pentacyclo[6.5.1.1^{3.6}.0^{2.7}.0^{9.13}]-4-pentadecene derivatives,
pentacyclopentadecadiene derivatives,
pentacyclo[7.4.0.1^{2.5}.1^{9.12}.0^{8.13}]-3-pentadecene derivatives,
heptacyclo[8.7.0.1^{3.6}.1^{10.17}.1^{12.15}.0^{2.7}.0^{11.16}]-4-eicosene derivatives,
nonacyclo[10.9.1.1^{4.7}.1^{13.20}.1^{15.18}.0^{3.8}.0^{2.10}.0^{12.21}.0^{14.11}]-5-pentacosene derivatives,
pentacyclo[8.4.0.1^{2.5}.1^{9.12}.0^{8.13}]-3-hexadecene derivatives,
heptacyclo[8.8.0.1^{4.7}.1^{11.15}.1^{13.16}.0^{3.8}.0^{12.17}]-5-heneicosene derivatives,
nonacyclo[10.10.1.1^{5.8}.1^{14.21}.1^{16.19}.0^{2.11}.0^{4,9}.0^{13,22}.0^{15,20}]-5-hexacosene derivatives,
1,4-methano-1,4,4a,9a-teterahydrofluorene derivatives,
1,4-methano-1,4,4a,5,10,10a-hexahydroanthracene derivatives,
and cyclopentadiene-acenaphthylene adducts.

More specifically, possible examples thereof include bicyclo[2.2.1]hepto-2-ene derivatives:
bicyclo[2.2.1]hepto-2-ene,
6-methylbicyclo[2.2.1]hepto-2-ene,
5,6-dimethylbicyclo[2.2.1]hepto-2-ene,
1-methylbicyclo[2.2.1]hepto-2-ene,
6-ethylbicyclo[2.2.1]hepto-2-ene,
6-*n*-butylbicyclo[2.2.1]hepto-2-ene,
6-isobutylbicyclo[2.2.1]hepto-2-ene and
7-methylbicyclo[2.2.1]hepto-2-ene;
tracyclo[4.4.0.1^{2.5}.1^{7.10}]-3-dodecene derivatives:
tetracyclo[4.4.0.1^{2,5}.1^{7,10}]-3-dodecene,
8-methyltetracyclo[4.9.0.1^{2.5}.1^{7.10}]-3-dodecene,
8-ethyltetracyclo[4.4.0.1^{2,5}.1^{7,10}]-3-dodecene,
8-propyltetracyclo[4.4.0.1^{2.5}.1^{7.10}]-3-dodecene,
8-butyltetracyclo[4.4.0.1^{2.5}.1^{7.10}]-3-dodecene,
8-isobutyltetracyclo[4.4.0.1^{2,5}.1^{7,10}]-3-dodecene,
8-hexyltetracyclo[4.4.0.1^{2.5}.1^{7.10}]-3-dodecene,
8-cyclohexyltetracyclo[4.4.0.1^{2,5}.1^{7,10}]-3-dodecene,
8-stearyltetracyclo[4.9.0.1^{2,5}.1^{7,10}]-3-dodecene,
5,10-dimethyltetracyclo[4.4.0.1^{2,5}.1^{7,10}]-3-dodecene,
2,10-dimethyltetracyclo[4.4.0.1^{2,5}.1^{7,10}]-3-dodecene,
8,9-dimethyltetracyclo[4.4.0.1^{2,5}.1^{7,10}]-3-dodecene,
8-ethyl-9-methyltetracyclo[4.4.0.1^{2,5}.1^{7,10}]-3-dodecene,
11,12-dimethyltetracyclo[4.4.0.1^{2,5}.1^{7,10}]-3-dodecene,
2,7,9-trimethyltetracyclo[4.4.0.1^{2,5}.1^{7,10}]-3-dodecene,
9-ethyl-2,7-dimethyltetracyclo[4.9.0.1^{2,5}.1^{7,10}]-3-dodecene,
9-isobutyl-2,7-dimethyltetracyclo[4.4.0.1^{2,5}.1^{7,10}]-3-dodecene,
9,11,12-trimethyltetracyclo[4.4.0.1^{2,5}.1^{7,10}]-3-dodecene,
9-ethyl-11,12-dimethyltetracyclo[4.4.0.1^{2,5}.1^{7,10}]-3-dodecene,
9-isobutyl-11,12-dimethyltetracyclo[4.4.0.1^{2,5}.1^{7,10}]-3-dodecene,
5,8,9,10-tetramethyltetracyclo[4.4.0.1^{2,5}1^{7,10}]-3-dodecene,
8-ethylidene-9-methyltetracyclo[4.4.0.1^{2,5}.1^{7,10}]-3-dodecene,
8-ethylidene-9-ethyltetracyclo[4.4.0.1^{2,5}.1^{7,10}]-3-dodecene,
8-ethylidene-9-isopropyltetracyclo[4.4.0.1^{2,5}1^{7,10}]-3-dodecene,
8-ethylidene-9-butyltetracyclo[4.4.0.1^{2,5}1^{7,10}]-3-dodecene,
8-*n*-propylidenetetracyclo[4.4.0.1^{2,5}1^{7,10}]-3-dodecene,
8-*n*-propylidene-9-methyltetracyclo[4.4.0.1^{2,5}.1^{7,10}]-3-dodecene,
8-*n*-propylidene-9-ethyltetracyclo[4.4.0.1^{2,5}.1^{7,10}]-3-dodecene,
8-*n*-propylidene-9-isopropyltetracyclo[4.4.0.1^{2,5}.1^{7,10}]-3-dodecene,
8-*n*-propylidene-9-butyltetracyclo[4.4.0.1^{2,5}.1^{7,10}]-3-dodecene,
8-isopropylidenetetracyclo[4.4.0.1^{2,5}.1^{7,10}]-3-dodecene,
8-isopropylidene-9-methyltetracyclo[4.4.0.1^{2,5}.1^{7,10}]-3-dodecene,
8-isopropylidene-9-ethyltetracyclo[4.4.0.1^{2,5}.1^{7,10}]-3-dodecene,
8-isopropylidene-9-isopropyltetracyclo[4.4.0.1^{2,5}.1^{7,10}]-3-dodecene,
8-isopropylidene-9-butyltetracyclo[4.4.0.1^{2,5}.1^{7,10}]-3-dodecene,
8-chlorotetracyclo[4.4.0.1^{2,5}.1^{7,10}]-3-dodecene,
8-bromotetracyclo[4.4.0.1^{2,5}.1^{7,10}]-3-dodecene,
8-fluorotetracyclo[4.4.0.1^{2,5}.1^{7,10}]-3-dodecene, and
8,9-dichlorotetracyclo[4.4.0.1^{2,5}.1^{7,10}]-3-dodecene;
hexacyclo[6.6.1.1^{3,6}.1^{10,13}.0^{2,7}.0^{9,14}]-4-heptadecene derivatives
hexacyclo[6.6.1.1^{3,6}.1^{10,13}.0^{2,7}.0^{9,14}]-4-heptadecene,
12-methylhexacyclo[6.6.1.1^{3,6}.1^{10,13}.0^{2,7}.0^{9,14}]-4-heptadecene,
12-ethylhexacyclo[6.6.1.1^{3,6}.1^{10,13}.0^{2,7}.0^{9,14}]-4-heptadecene,
12-isobutylhexacyclo[6.6.1.1^{3,6}.1^{10,13}.0^{2,7}.0^{9,14}]-4-heptadecene, and
1,6,10-trimethyl-12-isobutylhexacyclo[6.6.1.1^{3,6}.1^{10,13}.0^{2,7}.0^{9 ,14}]-4-heptadecene;
octacyclo[8.8.0.1^{2,9}.1^{4,7}.1^{11,18}.1^{13,16}.0^{3,8}.0^{12,17}]-5-docosene derivatives
octacyclo[8.8.0.1^{2,9}.1^{4,7}.1^{11,18}.1^{13,16}.0^{3,8}.0^{12,17}]-5-docosene,
15-methyloctacyclo[8.8.0.1^{2,9}.1^{4,7}.1^{11,18}.1^{13,16}.0^{3,8}.0^{12,17}]-5-docosene, and
15-ethyloctacyclo[8.8.0.1^{2,9}.1^{4,7}.1^{11,18}.1^{13,16}.0^{3,8}.0^{12,17}]-5-docosene;
pentacyclo[6.6.1.1^{3,6}.0^{2,7}.0^{9,14}]-4-hexadecene derivatives:
pentacyclo[6.6.1.1^{3,6}.0^{2,7}.0^{9,14}]-4-hexadecene,
1,3-dimethylpentacyclo[6.6.1.1^{3,6}.0^{2,7}.0^{9,14}]-4-hexadecene,
1,6-dimethylpentacyclo[6.6.1.1^{3,6}.0^{2,7}.0^{9,14}]-4-hexadecene and
15,16-dimethylpentacyclo[6.6.1.1^{3,6}.0^{2,7}.0^{9,14}]-4-hexadecene;
heptacyclo-5-eicosene derivatives or heptacyclo-5-heneicosene derivatives
heptacyclo[8.7.0.1^{2,9}.1^{4,7}.1^{11,17}.0^{3,8}.0^{12,16}]-5-eicosene and
heptacyclo[8.7.0.1^{2,9}.1^{4,7}.1^{11,17}.0^{3,8}.0^{12,16}]-5-heneicosene;
tricyclo[4.3. 0.1^{2,5}] -3-decene derivatives:
tricyclo[4.3.0.1^{2,5}]-3-decene,
2-methyltricyclo[4.3.0.1^{2,5}]-3-decene and
5-methyltricyclo[4.3.0.1^{2,5}]-3-decene;
tricyclo[4.4.0 .1^{2,5}]-3-undecene derivatives:
tricyclo[4.4.0.1^{2,5}]-3-undecene and
10-methyltricyclo[4.4.0.1^{2,5}]-3-undecene;
pentacyclo[6.5.1.1^{3,6}.0^{2,7}.0^{9,13}]-4-pentadecene derivatives
such as pentacyclo[6.5.1.1^{3,6}.0^{2,7}.0^{9,13}]-4-pentadecene,
1,3-dimethylpentacyclo[6.5.1.1^{3,6}.0^{2,7}.0^{9,13}]-4-pentadecene,
1,6-dimethylpentacyclo[6.5.1.1^{3,6}.0^{2,7}.0^{9,13}]-pentadecene and
14,15-dimethylpentacyclo[6.5.1.1^{3,6}.0^{2,7}.0^{9,13}]-4-pentadecene;
diene compounds:
pentacyclo[6.5.1.1^{3,6}.0^{2,7}.0^{9,13}]-4,10-pentadecadiene;
pentacyclo[7.4.0.1^{2,5}.1^{9,12}.0^{8,13}]-3-pentadecene derivatives
such as pentacyclo[7.4.0.1^{2,5}.1^{9,12}.0^{8,13}]-3-pentadecene and methyl-substituted pentacyclo[7.4.0.1^{2,5}.1^{9,12}.0^{8,13}]-3-pentadecene;
heptacyclo[8.7.0.1^{3,6}.1^{10,17}.1^{12,15}.0^{2,7}.0^{11,16}]-4-eicosene derivatives:
heptacyclo[8.7.0.1^{3,6}.1^{10,17}.1^{12,15}.0^{2,7}.0^{11,16}]-4-eicosene and
dimethyl-substituted heptacyclo[8.7.0.1^{3,6}.1^{10,17}.1^{12,15}.0^{2,7}. 0^{11,16}]-4-eicosene;
nonacyclo[10.9.1.1^{4,7}.1^{13,20}.1^{15,18}.0^{3,8}.0^{2,10}.0^{12,21}.0^{14,19}]-5-penta-cosene derivatives:
nonacyclo[10.9.1.1^{4,7}.1^{13,20}.1^{15,18}.0^{3,8}.0^{2,10}.0^{12,21}.0^{14,19}]-5-penta-cosene and
trimethyl-substituted nonacyclo[10.9.1.1^{4,7}.1^{13,20}.1^{15,18}.0^{3,8}. 0^{2,10}.0^{12,21}.0^{14,19}]-5-pentacosene;
pentacyclo[8.4.0.1^{2,5}.1^{9,12}.0^{8,13}]-3-hexadecene derivatives:
pentacyclo[8.4.0.1^{2,5}.1^{9,12}.0^{8,13}]-3-hexadecene,
11-methylpentacyclo[8.4.0.1^{2,5}.1^{9,12}.0^{8,13}]-3-hexadecene,
11-ethylpentacyclo[8.4.0.1^{2,5}.1^{9,12}.0^{8,13}]-3-hexadecene and
10,11-dimethylpentacyclo[8.4.0.1^{2,5}.1^{9,12}.0^{8,13}]-5-hexadecene;
heptacyclo[8.8.0.1^{4,7}.1^{11,18}.1^{13,16}.0^{3,8}.0^{12,17}]-5-heneicosene derivatives:
heptacyclo[8.8.0.1^{4,7}.1^{11,18}.1^{13,16}.0^{3,8}.0^{12,17}]-5-heneicosene,
15-methylheptacyclo[8.8.0.1^{4,7}.1^{11,18}.1^{13,16}.0^{3,8}.0^{12,17}]-5-heneicosene and
trimethylheptacyclo[8.8.0.1^{4,7}.1^{11,18}.1^{13,16}.0^{3,8}.0^{12,17}]-5-heneicosene;
nonacyclo[10.10.1.1^{5,8}.1^{14,21}.1^{16,19}.0^{2,11}.0^{4,9}.0^{13,22}.0^{15,20}]-6-hexacosene derivative
nonacyclo[10.10.1.1^{5,8}.1^{14,21}.1^{16,19}.0^{2,11}.0^{4,9}.0^{13,22}.0^{15,20}]-6-hexacosene;
pentacyclo[6.5.1.1^{3,6}.0^{2,7}.0^{9,13}]-4,11-pentadecadiene,
methyl-substituted pentacyclo[6.5.1.1^{3,6}.0^{2,7}.0^{9,13}]-4,11-pentadecadiene,
methyl-substituted pentacyclo[6.5.1.1^{3,6}.0^{2,7}.0^{9,13}]-4,11-pentadecadiene,
methyl-substituted pentacyclo[6.5.1.1^{3,6}.0^{2,7}.0^{9,13}]-4,11-pentadecadiene,
trimethyl-substituted pentacyclo[4.7.0.1^{2,5}.0^{8,13}.1^{9,12}]-3-pentadecene,
pentacyclo[4.7.0.1^{2,5}.0^{8,13}.1^{9,12}]-3,10-pentadecadiene,
methyl-substituted pentacyclo[4.7.0.1^{2,5}.0^{8,13}.1^{9,12}]-3,10-pentadecadiene,
methyl-substituted pentacyclo[4.7.0.1^{2,5}.0^{8,13}.1^{9,12}]-3,10-pentadecadiene,
methyl-substituted pentacyclo[4.7.0.1^{2,5}.0^{8,13}.1^{9,12}]-3,10-pentadecadiene,
methyl-substituted heptacyclo[7.8.0.1^{3,6}.0^{2,7}1^{10,17}.0^{11,16}. 1^{12,15}]-4-eicosene,
trimethyl-substituted heptacyclo[7.8.0.1^{3,6}.0^{2,7}1^{10,17}.0^{11,16}. 1^{12,15}]-4-eicosene,
tetramethyl-substituted heptacyclo[7.8.0.1^{3,6}.0^{2,7}1^{10,17}. 0^{11,16}.1^{12,15}]-4-eicosene,
tricyclo[4.3.0.1^{2,5}]-3,7-decadiene (i.e., dicyclopentadiene),
2,3-dihydrodicyclopentadiene,
5-phenylbicyclo[2.2.1]hepto-2-ene
(i.e., 5-phenyl-2-norbornen),
5-methyl-5-phenylbicyclo[2.2.1]hepto-2-ene,
5-benzylbicyclo[2.2.1]hepto-2-ene,
5-tolylbicyclo[2.2.1]hepto-2-ene,
5-(ethylphenyl)-bicyclo[2.2.1]hepto-2-ene,
5-(isopropylphenyl)-bicyclo[2.2.1]hepto-2-ene,
8-phenyltetracyclo[4.4.0.1^{2,5}.1^{7,10}]-3-dodecene,
8-methyl-8-phenyltetracyclo [4.4.0.1^{2,5}.1^{7,10}]-3-dodecene,
8-benzyltetracyclo[4.4.0.1^{2,5}.1^{7,10}]-3-dodecene,
8-tolyltetracyclo[4.4.0.1^{2,5}.1^{7,10}]-3-dodecene,
8-(ethylphenyl)-tetracyclo[4.4.0.1^{2,5}.1^{7,10}]-3-dodecene,
8-(isopropylphenyl)-tetracyclo[4.4.0.1^{2,5}.1^{7,10}]-3-dodecene,
8,9-diphenyltetracyclo[4.4.0.1^{2,5}.1^{7,10}]-3-dodecene,
8-(biphenyl)-tetracyclo[4.4.0.1^{2,5}.1^{7,10}]-3-dodecene,
8-(β-naphthyl)-tetracyclo[4.4.0.1^{2,5}.1^{7,10}]-3-dodecene,
8-(α-naphthyl)-tetracyclo[4.4.0.1^{2,5}.1^{7,10}]-3-dodecene,
8-(anthracenyl)-tetracyclo[4.4.0.1^{2,5}.1^{7,10}]-3-dodecene,
11-phenylhexacyclo[6.6.1.1^{3,6}.0^{2,7}.0^{9,14}]-4-heptadecene,
6-(α-naphthyl)-bicyclo[2.2.1]-hepto-2-ene,
5-(anthracenyl)-bicyclo[2.2.1]-hepto-2-ene,
5-(biphenyl)-bicyclo[2.2.1]-hepto-2-ene,
5-(β-naphthyl)-bicyclo[2.2.1]-hepto-2-ene,
5,6-diphenylbicyclo[2.2.1]-hepto-2-ene, 9-(2-norbornen-5-yl)-carbazole and
1,4-methano-1,4,4a,4b,5,8,8a,9a-octahydrofluorene compounds;
1,4-methano-1,4,4a,9a-tetrahydrofluorene compounds:
1,4-methano-1,4,4a,9a-tetrahydrofluorene,
1,4-methano-8-methyl-1,4,4a,9a-tetrahydrofluorene,
1,4-methano-8-chloro-1,4,4a,9a-tetrahydrofluorene and
1,4-methano-8-bromo-1,4,4a,9a-tetrahydrofluorene;
1,4-methano-1,4,4a,9a-tetrahydrodibenzofuran compounds;
1,4-methano-1,4,4a,9a-tetrahydrocarbazole compounds:
1,4-methano-1,4,4a,9a-tetrahydrocarbazole and
1,4-methano-9-phenyl-1,4,4a,9a-tetrahydrocarbazole;
1,4-methano-1,4,4a,5,10,10a-hexahydroanthracene compounds:
1,4-methano-1,4,4a,5,10,10a-hexahydroanthracene;
7,10-methano-6b,7,10,10a-tetrahydrofluoranthene compounds;
cyclopentadiene-acenaphthylene adduct further added with cyclopentadiene,
11,12-benzo-pentacyclo[6.5.1.1^{3,6}.0^{2,7}.0^{9,13}]-4-pentadecene,
11,12-benzo-pentacyclo[6.6.1.1^{3,6}.0^{2,7}.0^{9,14}]-4-hexadecene,
14,15-benzo-heptacyclo[8.7.0.1^{2,9}.1^{4,7}.1^{11,17}.0^{3,8}.0^{12,16}]-5-eico sene and cyclopentadiene-acenaphthylene adduct. These cycloolefinic monomers are available individually, or in any combinations of two or more thereof.

The hydrogenated compounds of the ring-opened polymer of the cycloolefin can be obtained by techniques disclosed for example in Japanese Laid-Open Patent Publication Nos. 60-26024, 63-218727 and 63-23201, by which the cycloolefin is polymerized typically using a polymerization catalyst comprising a metal compound, and then hydrogenated by well-known methods typically using a polymerization catalyst generally used for hydrogenation of olefin compounds.

Production method of a random copolymer with ethylene is typically found in Japanese Laid-Open Patent Publication No. 60-168708, in which the polymerization is proceeded using a catalyst comprising a vanadium compound and a halogen-containing, organo-aluminum compound. The molar fraction of ethylene in such case is preferably 40 to 90%.

As for the blend ratio of the polyolefinic resin and the amorphous resin in the amorphous resin-containing layer (B), the polyolefinic resin accounts for 0 to 85 wt%, and the amorphous resin accounts for 15 to 100%. The ratio of the amorphous resin less than 15 wt% will degrade the preventive effect against the solvent attack. A preferable blend ratio relates to the polyolefinic resin in an amount of 20 to 80 wt%, and the amorphous resin in an amount of 20 to 80 wt%.

The porosity of the amorphous resin-containing layer (B) must be 5% or below, and is more preferably 3% or below. The porosity of the amorphous resin-containing layer (B) is now referred to ratio of sectional area of voids in the amorphous resin-containing layer (B) determined by observing section of the multi-layered stretched resin film under a scanning electron microscope. The porosity exceeding 5% will result in penetration of the vehicle (in particular high-boiling-point, petroleum-base solvent such as mineral oil) in the offset printing ink through the voids to reach the base layer (A), to thereby swell the entire film, which is so-called solvent attack. It is also allowable to add an inorganic fine powder or an organic filler to the amorphous resin-containing layer (B) so far as the porosity is controlled at 5% or below.

While being not adhering to any theories, it is supposed that the surface waving or curling is successfully avoided because the amorphous resin added to the amorphous resin-containing layer (B) can effectively suppress the swelling of the amorphous resin-containing layer (B) *per se* ascribable to the vehicle (in particular high-boiling-point, petroleum-base solvent such as mineral oil) in the offset printing ink, and because the scarcity of the voids in the amorphous resin-containing layer (B) makes it difficult for the vehicle to penetrate such amorphous resin-containing layer (B) to reach the base layer (A), both of which effectively prevent the multi-layered resin film *per se* from being swollen. Thus the multi-layered stretched resin film of the present invention allows use of the general-purpose, quick-drying (dryingoil type) offset printing ink.

The thickness of the amorphous resin-containing layer (B) is preferably 1 to 100 µm.

### Surface Layer (C)

There is no special limitation on the species of the polyolefinic resin used for the surface layer (C), and those listed in the above for the base layer (A) are available. The polyolefinic resin used for the surface layer (C) preferably has a melting point (peak temperature in a DSC curve) of 130 to 210°C. In particular, propylene homopolymer having a melting point (peak temperature in a DSC curve) of 155 to 174°C, a melt flow rate (JISK-7210) of 0.5 to 20 g/10 minutes and a crystallinity of 45 to 70% is preferable. For the surface layer (C), a single .species may be selected from the above polyolefinic resins listed for the base layer (A) for independent use, or two or more species may be selected therefrom for combined use.
The inorganic fine powder used for the surface layer (C) preferably has an average grain size of 0.01 to 6 µm, more preferably 0.05 to 4 µm, and still more preferably 0.07 to 2 µm. The organic filler used for the surface layer (C) preferably has an average dispersion grain size of 0.01 to 6 µm, more preferably 0.05 to 4 µm, and still more preferably 0.07 to 2 µm.

Examples of the inorganic fine powder include heavy calcium carbonate, precipitated calcium carbonate, fired clay, talc, titanium oxide, barium sulfate, aluminum sulfate, silica, zinc oxide, magnesium oxide and diatom earth. Surface modified products of the above inorganic fine powders using various surface modifiers are also exemplified. Among these, heavy calcium carbonate, precipitated calcium carbonate, surface modified products of these calcium carbonates, clay and diatom earth are preferable in terms of inexpensiveness and void forming property in the stretching. Still more preferable are surface modified products of heavy calcium carbonate and precipitated calcium carbonate using various surface modifiers. Examples of the surface modifiers include resin acid, aliphatic acid, organic acid, sulfate ester type anionic surfactant, sulfonate type anionic surfactant, petroleum resin acid, and sodium, potassium or ammonium salts thereof, or aliphatic esters, or aliphatic acid esters or resin acid esters thereof, wax and paraffin. It is also preferable to use nonionic surfactant, diene-base polymer, titanate coupling agents, silane coupling agents and phosphate coupling agents. Examples of the sulfate-ester-type anionic surfactant include long-chain alcohol sulfate ester, polyoxyethylenealkylether sulfate ester, sulfated oil, and sodium or potassium salts thereof; examples of the sulfonate-type anionic surfactant include alkylbenzenesulfonic acid, alkylnaphthalenesulfonic acid, paraffinsulfonic acid, α -olefinsulfonic acid, alkylsulfosuccinic acid, and sodium or potassium salts thereof. Examples of the aliphatic acid include caproic acid, caprylic acid, pelargonicacid, capricacid, undecanoicacid, lauricacid, myristic acid, palmitic acid, stearic acid, behenic acid, oleic acid, linoleic acid, linolenic acid and eleostearic acid; examples of the organic acid include maleic acid and sorbic acid; examples of diene-base polymer include polybutadiene and isoprene; and examples of nonionic surfactant include polyethyleneglycol ester type surfactant. These surface modifiers may be used individually or in any combinations of two or more thereof.

The organic filler is exemplified by polyethylene terephthalate, polybutylene terephthalate, polyamide, polycarbonate, polyethylene naphthalate, polystyrene, melamine resin, cyclopolyolefin, polyethylene sulfite, polyimide, polyethyl ether ketone and polyphenylene sulfite. Among these, incompatible organic fillers having a higher melting point or glass transition temperature than that of the polyolefinic resin to be combined therewith are preferable in terms of void formation.

For the surface layer (C), a single species of the inorganic fine powder or the organic filler may be selected from the above for independent use, or two or more species may be selected therefrom for combined use. The case of combined use of two or more species allows mixed use of the organic filler and the inorganic fine powder.

The thickness of the surface layer (C) is preferably 1 to 100 µm, and is more preferably 1.5 to 50 µm.

In a preferred embodiment said surface layer (C) has a smoothness in compliance with JIS P-8119 of 20,000 seconds or less.

### Intermediate Layer (D)

In order to add a paper-like texture to the multi-layered stretched resin film of the present invention, it is allowable to provide the intermediate layer (D) between the base layer (A) and amorphous resin-containing layer (B), or between the base layer (A) and surface layer (C). The intermediate layer (D) to be formed preferably contains a polyolefinic resin and an inorganic fine powder or organic filler. The polyolefinic resin, inorganic fine powder and organic filler available for the intermediate layer (D) can be typified by those listed above in the description for the base layer (A). In particular, propylene-base resin is preferably selected as the polyolefinic resin. Among the inorganic fine powder and organic filler, the former is more preferable. In order to further improve the stretching property, it is also allowable to add a small amount of low-melting-point resin such as propylene-base copolymer, high-density polyethylene, polystyrene and ethylene-vinyl acetate copolymer.

The intermediate layer (D) preferably comprises 45 to 98 wt% of the polyolefinic resin and 2 to 55 wt% of the inorganic fine powder or organic filler, and more preferably comprises 45 to 98 wt% of the propylene-base resin and 2 to 55 wt% of the inorganic fine powder.

The thickness of the intermediate layer (D) is preferably 1 to 200 µm, and more preferably 2 to 100 µm.

### Production of Multi-Layered Stretched Resin Film

There is no special limitation on the production method of the multi-layered stretched resin film of the present invention. Any films produced according to any methods will be included within the scope of the present invention provided that they satisfy the conditions described in claims. The following paragraphs deal with preferable methods for producing the multi-layered stretched resin film of the present invention.

The multi-layered stretched resin film of the present invention can be produced by first kneading under fusion a resin composition for the base layer (A), extruding the kneaded resin in a sheet form; stretching the sheet 4 to 7-fold in the longitudinal direction effected by difference in the peripheral speeds of a number of.roller groups; laminating at least on one surface of which a sheet of the amorphous resin-containing layer (B) which is obtained by separately kneading a resin composition therefor under fusion; stretching the laminate 4 to 12-fold using a tenter in the transverse direction at a temperature higher by 10°C or more than the glass transition temperature of the amorphous resin; and then subjecting the resultant film to annealing and cooling.

Another allowable process relates to that the resin compositions for the base layer (A) and the amorphous resin-containing layer (B) are separately kneaded under fusion, the compositions are co-extruded or laminated in a sheet form so as to direct the amorphous resin-containing layer (B) outward, the obtained sheet is stretched 4 to 7-fold in the longitudinal direction effected by difference in the peripheral speeds of a number of roller groups at a temperature higher by 10°C or more than the glass transition temperature of the amorphous resin, the resultant sheet was further stretched 4 to 12-fold using a tenter in the transverse direction at a temperature higher by 10°C or more than the glass transition temperature of the amorphous resin, and the resultant film is then subjected to annealing and cooling. Still another possible process relates to that the resin compositions for the base layer (A) and the amorphous resin-containing layer (B) are separately kneaded under fusion, the compositions are co-extruded or laminated in a sheet form so as to direct the amorphous resin-containing layer (B) outward, the obtained sheet is stretched 4 to 7-fold in the longitudinal direction effected by difference in the peripheral speeds of a number of roller groups at a temperature higher by 10°C or more than the glass transition temperature of the amorphous resin, and the resultant film is then subjected to annealing and cooling.

The multi-layered stretched resin film of the present invention comprising the base layer (A), amorphous resin-containing layer (B) and surface layer (C) can be fabricated by preliminarily kneading under fusion the resin composition for the base layer (A), extruding the kneaded composition in a sheet form, stretching the obtained sheet 4 to 7-fold in the longitudinal direction effected by difference in the peripheral speeds of a number of roller groups, laminating thereon the resin compositions for the amorphous resin-containing layer (B) and surface layer (C), which are preliminarily kneaded under fusion in a separate manner, so as to attain a desired layer constitution, stretching the resultant sheet 4 to 12-fold using a tenter in the transverse direction at a temperature higher by 10°C or more than the glass transition temperature of the amorphous resin, annealing and then cooling the resultant film.

Another allowable process relates to that the resin compositions for the base layer (A), amorphous resin-containing layer (B) and surface layer (C) are separately kneaded under fusion, the compositions are co-extruded in a sheet form so as to attain a desired layer constitution, the obtained sheet is stretched 4 to 7-fold in the longitudinal direction effected by difference in the peripheral speeds of a number of roller groups at a temperature higher by 10°C or more than the glass transition temperature of the amorphous resin, and the resultant sheet is then stretched 4 to 12-fold using a tenter in the transverse direction again at a temperature higher by 10°C or more than the glass transition temperature of the amorphous resin, which is followed by annealing and cooling. Still another process relates to that the resin compositions for the base layer (A), amorphous resin-containing layer (B) and surface layer (C) are preliminarily kneaded under fusion in a separate manner, the kneaded compositions are co-extruded in a sheet form so as to attain a desired layer constitution, the resultant sheet is stretched 4 to 7-fold in the longitudinal direction effected by difference in the peripheral speeds of a number of roller groups at a temperature higher by 10°C or more than the glass transition temperature of the amorphous resin, and the stretched film is annealed and then cooled.

Also the multi-layered stretched resin film of the present invention having the intermediate layer (D) can be produced in the same manner.

The multi-layered stretched resin film of the present invention preferably has an opacity (measured in compliance with JIS P-8138) of less than 70%, and more preferably 20% or above and less than 70%.

The thickness of the multi-layered stretched resin film of the present invention is preferably 30 to 450 µm.

The multi-layered stretched resin film of the present invention has a layer constitution containing (B)/(A). The multi-layered stretched resin film of the present invention most preferably has a layer constitution containing (C)/(B)/(A), which specifically includes those expressed by (C)/(B)/(A)/(B)/(C), (C)/(B)/(A)/(B), (C)/(B)/(A)/(C) and (C)/(B)/(A). It should now be noted that notation "(B)/(A)" represents a constitution in which the amorphous resin-containing layer (B) is provided on the base layer (A) An additional layer such as the foregoing surface layer (D), other than the base layer (A), amorphous resin-containing layer (B) and surface layer (C), can be provided between arbitrary adjacent layers. Such additional layer can properly be selected depending on applications and desired functions of the multi-layered stretched resin film.

In order to improve the offset printing property, it is also allowable to modify the surface of the multi-layered stretched resin film by corona discharge treatment, flame treatment or coating of a water-soluble primer selected from the group consisting of ethyleneimine adducts such as polyethyleneimine, butylated polyethyleneimine, hydroxypropylated polyethyleneimine, hydroxyethylated polyethyleneimine, 2,3-dihydroxypropylated polyethyleneimine, poly(ethyleneimine-urea), and polyamine polyamide; epichlorohydrin adducts such as polyamine polyamide; and ternary or quaternary nitrogen-containing acrylic resin.

In order to further improve the offset printing suitability of the multi-layered stretched resin film of the present invention, a pigment coated layer can be provided at least on the outermost layer of the plane to be printed. Such pigment coated layer can be formed by pigment coating according to general coating procedures for producing coated paper.

A pigment coating material used for the pigment coating is exemplified as a latex used for producing general coated layer, which contains 30 to 80 wt% of a pigment such as clay, talc, calcium carbonate, magnesium carbonate, aluminum hydroxide, silica, calcium silicate or plastic pigment, together with 20 to 70 wt% of an adhesive.

Examples of the adhesive available herein include latex such as SBR (styrene-butadiene copolymeric rubber), MBR (methacrylate-butadiene copolymeric rubber) ; acrylic emulsion, starch, PVA (polyvinyl alcohol), CMC (carboxymethyl cellulose) and methyl cellulose.

Such pigment coating material may further be added with a dispersion aid typically comprising a special sodium polycarboxylate such as acrylic acid/sodium acrylate copolymer, or with a crosslinking agent such as polyamide-urea-base resin. Such pigment coating material is generally used in a form of a water-soluble coating agent having a solid content of 15 to 70 wt%, and more preferably 35 to 65 wt%.

Methods for coating such coating material onto the multi-layered stretched resin film is exemplified as gravure coating, Mayer bar coating, roll coating, blade coating or size press coating. The amount of coating is generally 0.01 to 20 g/m², and more preferably 0.1 to 15 g/m².

### Examples

Next, the present invention will further be detailed referring to specific Examples, Comparative Examples and Test Examples. Materials, amount of use thereof, ratio of use, operations or the like can properly be modified without departing from the spirit of the present invention. Thus it is to be understood that the present invention is by no means limited to the specific examples explained below.

Details of the amorphous resins, polyolefinic resins and inorganic fine powders used for Examples and Comparative Examples were listed in Table 2.

**Table 2 Details of Amorphous Resins, Polyolefinic Resins and Inorganic Fine Powders**

| Symbol | Name of material | Trade name | Description |
|---|---|---|---|
| | (Amorphous resin) | | |
| a | cycloolefin-ethylene copolymer | Mitsui Chemicals, Inc., APL6015 | glass transition point = 140°C |
| b | cycloolefin-ethylene copolymer | Mitsui Chemicals, Inc., APL6013 | glass transition point = 125°C |
| c | cycloolefin-ethylene copolymer | Mitsui Chemicals, Inc., APL6509 | glass transition point = 80°C |
| d | cycloolefin-ethylene copolymer | Mitsui Chemicals, Inc., APL5018 | glass transition 160°C |
| e | cycloolefin-ethylene copolymer | Mitsui Chemicals, Inc., APL6011 | glass transition point = 105°C |
| f | cycloolefinic polymer | Zeon Corporation, Zeonor 1020R | glass transition point = 105°C |
| g | atactic polystyrene | A&M Polystyrene Co., Ltd., GPPS-G8259 | glass transition point = 100°C |
| | (Polyolefinic resin) | | |
| a | highly-crystallized propylene | Japan Polychem Corporation, MA4U | MFR = 5.0 g/10 min, crystallinity = 60%, |
| | homopolymer | | melting peak temperature = 165°C, |
| | | | melting completion temperature = 171 °C |
| β | propylene homopolymer | Japan Polychem Corporation, MA4 | MFR = 5.0 g/10 min, |
| | | | melting peak temperature = 160°C, |
| | | | melting completion temperature = 167°C |
| γ | ethylene homopolymer | Japan Polychem Corporation, HJ360 | MFR = 5.5 g/10 min, |
| | | | melting peak temperature = 130°C, |
| | | | melting completion temperature = 135°C |
| | (Inorganic Fine powder) | | |
| A | surface-modified precipitated calcium carbonate | Maruo Calcium Co., Ltd., MC-S5 | average grain size = 0.1 µm, modified with aliphatic acid and sulfonic acid |
| B | surface-modified precipitated calcium carbonate | Maruo Calcium Co., Ltd., MSK-PO | average grain size = 0.15 µm, modified with aliphatic acid |
| C | precipitated calcium carbonate | Shiroichi Kogyo K.K., Brilliant-15 | average grain size = 0.15 |
| D | heavy calcium carbonate | Bihoku Funka Kogyo K.K., Softon #3200 | average grain size = 0.7 µm |
| E | heavy calcium carbonate | Bihoku Funka Kogyo K.K., Softon #1800 | average grain size = 1.25 µm |
| F | surface-modified heavy calcium carbonate | Maruo Calcium Co., Ltd., Nanocoat S-25 | average grain size = 1.1 µm, modified with aliphatic acid |

### (Examples 1 and 4 to 13)

A composition (A) was prepared by mixing 87 wt% of a propylene homopolymer having a melt flow rate (MFR) of 0.8 g/10 minutes (peak melting temperature = 160°C, melting completion temperature = 167°C) and 8 wt% of a high-density polyethylene, and by further adding thereto 5 wt% of calcium carbonate having an average grain size of 1.5 µm. The composition (A) was kneaded under fusion in an extruder set at 270°C, extruded from a die in a sheet form, and then cooled using a cooling apparatus to thereby produce a non-stretched sheet. The sheet was re-heated up to 155°C and stretched 5-fold in the longitudinal direction effected by difference in the peripheral speeds of a number of roller groups.

A composition (B) was separately prepared by mixing an amorphous resin with a polyolefinic resin, both listed in Table 3, in an amount again listed in Table 3. The composition (B) was kneaded under fusion in an extruder set at 270°C, extruded from a die in a sheet form, and the obtained sheet was laminated on one plane of the foregoing 5-fold stretched sheet (A). The sheet (B) was also laminated on the opposite plane of such 5-fold stretched sheet to thereby obtain a three-layered stack.

The three-layered stack was heated to 175°C, stretched 7.5-fold in the transverse direction using a tenter to thereby obtain a three-layered film. The surface of such three-layered film was subjected to corona discharge treatment to thereby obtain a three-layered stretched resin film having a constitution expressed as (B)/(A)/(B) (in 15 µm/80 µm/15 µm thick).

Such procedures were repeated while changing the species and the amount of use of the amorphous resin and polyolefinic resin for the amorphous resin-containing layer (B), to thereby obtain 11 types of the multi-layered stretched resin films according to Examples 1 and 4 to 13.

### (Example 2)

A three-layered stretched resin film was obtained similarly as described in Example 1, except that the composition (A) was prepared by mixing 90 wt% of a propylene homopolymer having a melt flow rate (MFR) of 0. 8 g/10 minutes (peak melting temperature = 160°C, melting completion temperature = 167°C) and 8 wt% of a high-density polyethylene, and by further adding thereto 2 wt% of calcium carbonate having an average grain size of 1.5 µm, and that the composition (B) was prepared using materials listed in Table 3 in amounts again listed in Table 3.

### (Example 3)

A three-layered stretched resin film was obtained similarly as described in Example 1, except that the composition (A) was prepared by mixing 84 wt% of a propylene homopolymer having a melt flow rate (MFR) of 0.8 g/10 minutes (peak melting temperature = 160°C, melting completion temperature = 167°C) and 8 wt% of a high-density polyethylene, and by further adding thereto 8 wt% of calcium carbonate having an average grain size of 1.5 µm, and that the composition (B) was prepared using materials listed in Table 3 in amounts again listed in Table 3.

### (Example 14)

A composition (A) was prepared by mixing 90 wt% of a propylene homopolymer having a melt flow rate (MFR) of 0.8 g/10 minutes (peak melting temperature = 160°C, melting completion temperature = 167°C) and 8 wt% of a high-density polyethylene, and by further adding thereto 2 wt% of calcium carbonate having an average grain size of 1.5 µm. The composition (A) was kneaded under fusion in an extruder set at 270°C, extruded from a die in a sheet form, and then cooled using a cooling apparatus to thereby produce a non-stretched sheet. The sheet was re-heated up to 155°C and stretched 5-fold in the longitudinal direction effected by difference in the peripheral speeds of a number of roller groups.

A composition (B) was separately prepared by mixing an amorphous resin with a polyolefinic resin, both listed in Table 3, in amounts again listed in Table 3. The composition (C) was prepared by mixing 70 wt% of a propylene homopolymer having a melt flow rate (MFR) of 4.0g/10minutes (peakmeltingtemperature = 160°C, melting completion temperature = 167°C) and 30 wt% of a calcium carbonate having an average grain size of 1.5 µm. The compositions (B) and (C) were separately kneaded under fusion in the individual extruders set at 270°C, stacked in a single die and then co-extruded therefrom, and the obtained sheet was then laminated on one plane of the foregoing 5-fold stretched sheet (A) so that the layer (B) directs outward, and also on the opposite plane while similarly directing the layer (B) outward, to thereby obtain a five-layered stack.

The five-layered stack was heated to 165°C, stretched 7. 5-fold in the transverse direction using a tenter to thereby obtain a five-layered film. The surface of such five-layered film was subjected to corona discharge treatment to thereby obtain a five-layered stretched resin film having a constitution expressed as (B)/(C)/(A)/(C)/(B) (in 5 µm/25 µm/70 µm/25 µm/5 µm thick).

### (Comparative Example 1)

A five-layered stretched resin filmwas obtained similarly as described in Example 14, except that the composition (B) was prepared by mixing 55 wt% of a propylene homopolymer having a melt flow rate (MFR) of 5.0 g/10 minutes (peakmelting temperature = 160°C, melting completion temperature = 167°C) and 45 wt% of calcium carbonate having an average grain size of 1.5 µm.

### (Example 15)

A composition (A) was prepared by mixing 88 wt% of a propylene homopolymer having a melt flow rate (MFR) of 0.8 g/10 minutes (peak melting temperature = 160°C, melting completion temperature = 167°C) and 10 wt% of a high-density polyethylene, and by further adding thereto 2 wt% of calcium carbonate having an average grain size of 1.5 µm. A composition (B) was separately prepared by mixing an amorphous resin with a polyolefinic resin, both listed in Table 3, in amounts again listed in Table 3. These compositions (A) and (B) were separately kneaded under fusion in the individual extruders set at 270°C, stacked in a single die so as to attain a stack constitution of (B)/(A)/(B), co-extruded therefrom in a sheet form, and then cooled using a cooling apparatus to thereby obtain a non-stretched film. The obtained sheet was heated at 155°C, stretched 5-fold in the longitudinal direction effected by difference in the peripheral speeds of a number of roller groups. The three-layered stack was then heated to 175°C, and was then stretched 7.5-fold in the transverse direction using a tenter to thereby obtain a three-layered film. The surface of such three-layered film was subjected to corona discharge treatment to thereby obtain a three-layered stretched resin film having a constitution expressed as (B)/(A)/(B) (in 5 µm/50 µm/5 µm thick).

### (Example 16)

A composition (A) was prepared by mixing 87 wt% of a propylene homopolymer having a melt flow rate (MFR) of 0.8 g/10 minutes (peak melting temperature = 160°C, melting completion temperature = 167°C) and 8 wt% of a high-density polyethylene, and by further adding thereto 5 wt% of calcium carbonate having an average grain size of 1.5 µm. A composition (B) was separately prepared by mixing an amorphous resin with a polyolefinic resin, both listed in Table 3, in an amount again listed in Table 3. These compositions (A) and (B) were separately kneaded under fusion in the individual extruders set at 270°C, co-extruded therefrom in a sheet form so as to attain a layer constitution of (B)/(A)/(B), and then cooled using a cooling apparatus to thereby obtain a non-stretched film. The obtained sheet was heated at 155°C, stretched 5-fold in the longitudinal direction effected by difference in the peripheral speeds of a number of roller groups to thereby obtain a three-layered film. The three-layered film was then subjected to corona discharge treatment to thereby obtain a three-layered stretched resin film having a constitution expressed as (B)/(A)/(B) (in 15 µm/100 µm/15 µm thick).

### (Examples 17 to 22)

On one side of the multi-layered stretched resin films obtained in Examples 4, 6, 9, and 14 to 16, a water-soluble coating material was individually coated so as to form a coated film of 2 g/m², where the coating material comprises 20 wt% of precipitated calcium carbonate (product of Shiroishi Kogyo K.K., Brilliant-15), 5 wt% of kaolin clay (product of Engelhard Corporation, ultrawhite-90), 75 wt% of silica-compounded acryl emulsion (product of Clariant Polymers K.K. , Movinyl M8010) and 5 wt% of specialized modified polyvinyl alcohol (product of Nippon Synthetic Chemical Industry Co., Ltd., Gohsephimar Z-100), wherein all numerals of the blending amounts herein are expressed in solid contents, and was then dried at 105°C for 1 minute to thereby obtain a coated film.

The precipitated calcium carbonate and kaolin gray herein were individually added with, as a dispersion aid, 0.5 weight parts of specialized sodium polycarboxylate (product of Kao Corporation, Poiz 520) per 100 weight parts of such powders, and the polyvinyl alcohol was added with, as a crosslinking agent, 10 weight parts of polyamide urea-base resin (product of Sumitomo Chemical, Sumirez Resin 633) per 100 weight parts thereof.

### (Test Example 1)

The multi-layered stretched resin films obtained in Examples 1 to 22 and Comparative Example 1 were subjected to measurements of porosity and opacity, and the offset printing suitability (curl height, waving after printing with a practical printing machine, and ink drying property) was evaluated. Results were shown in Tables 3 and 4.

### (1) Porosity

Section of the multi-lavered stretched film was observed under a scanning electron microscope, and a ratio of area of voids in the amorphous resin-containing layer (B) was estimated, which was referred to as porosity (%) of the amorphous resin-containing layer (B).

### (2) Opacity

Opacity was measured in compliance with JIS P-8138.

### (3) Curl Height

The entire surface of the multi-layered stretched resin film to be evaluated was subjected to printing with a dry type offset printing ink (product of T&K TOKA Company, Supertech Magenta) in a transfer amount of 1.5 g/m² using a printing suitability tester (product of Ishikawaj ima Industrial Machines, Model RI-2). The obtained printed matter was cut into a 10 cm × 10 cm piece and allowed to stand on a flat table 2 for a day. Curl height of the printed matter 1 as shown in Fig. 1 was measured at four corners thereof and an average value was found.

### (4) Generation of Surface Waving

The multi-layered stretched resin film to be evaluated was subjected to 1,000-sheet continuous printing with dry type offset printing inks of four colors (product of T&K TOKA Company, Supertech Black, Cyan, Magenta and Yellow) in a transfer amount of 1.5 g/m² for each color using a four-color offset printing machine (product of Mitsubishi Heavy Industries, Ltd., Model OF-4). The obtained printed matters were allowed to stand while being stacked in a columnar form. After the inks were dried, waving of the film caused by film areas with or without applied inks was judged by sensory evaluation. Evaluation criteria are as follows:
○ : no waving;
Δ : waving recognizable; and
× : serious waving.

### (5) Ink Drying Property

The multi-layered stretched resin film to be evaluated was subjected to 1, 000-sheet continuous printing with dry type offset printing inks of four colors (product of T&K TOKA Company, Supertech Black, Cyan, Magenta and Yellow) in a transfer amount of 1.5 g/m² for each color using a four-color offset printing machine (product of Mitsubishi Heavy Industries, Ltd., Model OF-4). The obtained printed matters were allowed to stand while being stacked in a columnar form, and sampled for every predetermined time period to be confirmed for the dry status. Evaluation criteria for the ink drying property are as follows:
5 : very rapid;
4 : rapid;
3 : non-problematic level;
4 : a little slow and problematic; and
5 : very slow.

**Table 3**

| | Stretching direction of layer (A) | Constitution of layer (B) | | | | | | | Opacity of stretched film (%) | Offset printing suitability | |
|---|---|---|---|---|---|---|---|---|---|---|---|
| | | Amorphous resin | | | Polyolefinic resin | | Stretching direction | Porosity (%) | | Curl height (mm) | Waving after printing with practical printing machine |
| | | Type | Glass transition temperature (wt%) (°C) | Content (wt%) | Type | Content (wt%) | | | | | |
| Example 1 | biaxial | a | 140 | 20 | α | 80 | uniaxial | 0 | 37 | 1 | O |
| Example 2 | biaxial | a | 140 | 50 | α | 50 | uniaxial | 1 | 25 | 1 | O |
| Example 3 | biaxial | b | 125 | 20 | α | 80 | uniaxial | 0 | 45 | 0 | O |
| Example 4 | biaxial | b | 125 | 50 | α | 50 | uniaxial | 0 | 35 | 0 | O |
| Example 5 | biaxial | b | 125 | 70 | α | 30 | uniaxial | 0 | 36 | 0 | O |
| Example 6 | biaxial | c | 80 | 50 | α | 50 | uniaxial | 0 | 33 | 0 | O |
| Example 7 | biaxial | f | 105 | 50 | α | 50 | uniaxial | 0 | 34 | 0 | O |
| Example 8 | biaxial | a | 140 | 20 | β | 80 | uniaxial | 0 | 36 | 1 | O |
| Example 9 | biaxial | b | 125 | 50 | β | 50 | uniaxial | 0 | 36 | 0 | O |
| Example 10 | biaxial | c | 80 | 50 | β | 50 | uniaxial | 0 | 31 | 0 | O |
| Example 11 | biaxial | b | 125 | 50 | γ | 50 | uniaxial | 0 | 31 | 0 | O |
| Example 12 | biaxial | b | 125 | 50 | β γ | 25 25 | uniaxial | 0 | 33 | 0 | O |
| Example 13 | biaxial | d | 160 | 20 | α | 80 | uniaxial | 3 | 39 | 2 | O |
| Example 14 | biaxial | b | 125 | 50 | α | 50 | uniaxial | 0 | 62 | 0 | O |
| Example 15 | biaxial | b | 00 | 50 | α | 50 | biaxial | 0 | 21 | 0 | O |
| Example 16 | uniaxial | c | 80 | 50 | α | 50 | uniaxial | 0 | 45 | 0 | O |
| | | | | | | | | | | | |
| Comparative Example 1 | biaxial | - | - | - | - | - | uniaxial | 5 | 43 | 34 | × |

**Table 4**

| | Example of multi-layered stretched resin film | Constitution of layer (B) | | | | | | | Opacity of stretched film (%) | Offset printing suitability | | |
|---|---|---|---|---|---|---|---|---|---|---|---|---|
| | | Amorphous resin | | | Polyolefinic resin | | Stretching direction | Porosity (%) | | Curl height (mm) | Waving after printing with practical printing machine | Ink drying property |
| | | Type | Glass transition temperature (°C) | Content (wt%) | Type | Content (wt%) | | | | | | |
| Example 17 | 4 | b | 125 | 50 | α | 50 | uniaxial | 0 | 48 | 0 | O | 5 |
| Example 10 | 6 | c | 80 | 50 | α | 50 | uniaxial | 0 | 48 | 0 | O | 5 |
| Example 19 | 9 | b | 125 | 50 | β | 50 | uniaxial | 0 | 48 | 0 | O | 5 |
| Example 20 | 14 | b | 125 | 50 | α | 50 | uniaxial | 0 | 69 | 0 | O | 5 |
| Example 21 | 15 | b | 125 | 50 | α | 50 | biaxial | 0 | 40 | 0 | O | 5 |
| Example 22 | 16 | c | 80 | 50 | α | 50 | uniaxial | 0 | 55 | 0 | O | 5 |

### (Examples 23 and 26 to 42)

A composition (A) was prepared by mixing 87 wt% of a propylene homopolymer having a melt flow rate (MFR) of 0. 8 g/10 minutes (peak melting temperature = 160°C, melting completion temperature = 167°C) and 8 wt% of a high-density polyethylene, and by further adding thereto 5 wt% of calcium carbonate having an average grain size of 1.5 µm. The composition (A) was kneaded' under fusion in an extruder set at 270°C, extruded from a die in a sheet form, and then cooled using a cooling apparatus to thereby produce a non-stretched sheet. The sheet was re-heated up to 155°C and stretched 5-fold in the longitudinal direction effected by difference in the peripheral speeds of a number of roller groups.

A composition (B) was separately prepared by mixing an amorphous resin with a polyolefinic resin, both listed in Table 5, in amounts again listed in Table 5. The composition (C) was prepared by mixing an inorganic fine powder and a propylene homopolymer having a melt flow rate (MFR) of 4.0 g/10 minutes (peak melting temperature = 160 °C, melting completion temperature = 167°C), both listed in Table 5, in amounts again listed in Table 5. The compositions (B) and (C) were separately kneaded under fusion in the individual extruders set at 270°C, stacked in a single die and then co-extruded therefrom, and the obtained sheet was then laminated on one plane of the foregoing 5-fold stretched sheet (A) so as to attain a layer constitution of (C) / (B) / (A) . The obtained sheet was also laminated on the opposite plane to thereby finally obtain a five-layered stack having a layer constitution of (C) / (B) / (A) / (B) / (C)

The five-layered stack was heated to 175°C, stretched 7.5-fold in the transverse direction using a tenter to thereby obtain a five-layered film. The surface of such five-layered film was subjected to corona discharge treatment to thereby obtain a five-layered stretched resin film having a constitution expressed as (C) / (B) / (A) / (B) / (C) (in 4 µm/15 µm/72 µm/15 µm/4 µm thick).

Such procedures were repeated while changing the species and the amount of use of the amorphous resin and polyolefinic resin for the amorphous resin-containing layer' (B), and the inorganic fine powder for the surface layer (C) as shown in Table 5, to thereby obtain 18 types of the multi-layered stretched resin films according to Examples 23 and 26 to 42.

### (Example 24)

A five-layered stretched resin filmwas obtained similarly as described in Example 23, except that the composition (A) was prepared by mixing 90 wt% of a propylene homopolymer having a melt flow rate (MFR) of 0.8 g/10minutes (peak melting temperature = 160°C, melting completion temperature = 167°C) and 8 wt% of a high-density polyethylene, and by further adding thereto 2 wt% of calcium carbonate having an average grain size of 1.5 µm, and that the compositions (B) and (C) were prepared using materials listed in Table 5 in amounts again listed in Table

### (Example 25)

A five-layered stretched resin filmwas obtained similarly as described in Example 23, except that the composition (A) was prepared by mixing 84 wt% of a propylene homopolymer having a melt flow rate (MFR) of 0.8g/10minutes (peak melting temperature = 160°C, melting completion temperature = 167°C) and 8 wt% of a high-density polyethylene, and by further adding thereto 8 wt% of calcium carbonate having an average grain size of 1.5 µm, and that the compositions (B) and (C) were prepared using materials listed in Table 5 in amounts again listed in Table 5.

### (Example 43)

A composition (A) was prepared by mixing 90 wt% of a propylene homopolymer having a melt flow rate (MFR) of 0.8 g/10 minutes (peak melting temperature = 160°C, melting completion temperature = 167°C) and 8 wt% of a high-density polyethylene, and by further adding thereto 2 wt% of calcium carbonate having an average grain size of 1. 5 µm. The composition (A) was kneaded under fusion in an extruder set at 270°C, extruded from a die in a sheet form, and then cooled using a cooling apparatus to thereby produce a non-stretched sheet. The sheet was re-heated up to 155°C and stretched 5-fold in the longitudinal direction effected by difference in the peripheral speeds of a number of roller groups.

A composition (B) was separately prepared by mixing an amorphous resin with a polyolefinic resin, both listed in Table 5, in amounts again listed in Table 5. The composition (C) was prepared by mixing an inorganic fine powder and a propylene homopolymer having a melt flow rate (MFR) of 4.0 g/10 minutes (peak melting temperature = 160 °C , melting completion temperature = 167°C) , both listed in Table 5, in amounts again listed in Table 5. The composition (D) was prepared by mixing 70 wt% of a propylene homopolymer having a melt flow rate (MFR) of 4.0 g/10 minutes (peak melting temperature = 160°C, melting completion temperature = 167°C) and 30 wt% of calcium carbonate having an average grain size of 1.5 µm. The compositions (B) , (C) and (D) were separately kneaded under fusion in the individual extruders set at 270 °C, stacked in a single die and then co-extruded therefrom, and the obtained sheet was then laminated on one plane of the foregoing 5-fold stretched sheet (A) so as to attain a layer constitution of (C) / (B) / (D) / (A) . The obtained sheet was also laminated on the opposite plane to thereby finally obtain a seven-layered stack having a layer constitution of (C) / (B) / (D) / (A) / (D) / (B) / (C) .

The seven-layered stack was heated to 175°C, stretched 7.5-fold in the transverse direction using a tenter to thereby obtain a seven-layered film. The surface of such seven-layered film was subjected to corona discharge treatment to thereby obtain a seven-layered stretched resin filmhavinga constitution expressed as (C) (B) / (D) / (A) / (D) / (B),/ (C) (in 4 µm/15 µm/15 µm/62 µm/15 µm/15 µm/4 µm thick).

### (Comparative Example 2)

A seven-layered stretched resin film was obtained similarly as described in Example 43, except that the composition (B) was prepared by mixing 55 wt% of a propylene homopolymer having a melt flow rate (MFR) of 5.0 g/10 minutes (peak melting temperature = 160°C, melting completion temperature = 167°C) and 45 wt% of calcium carbonate having an average grain size of 1.5 µm, the composition (C) was prepared by adding an inorganic fine powder listed in Table 5 in an amount again listed in Table 5 to a propylene homopolymer having a melt flow rate (MFR) of 4.0 g/10 minutes (peak melting temperature = 160°C, melting completion temperature = 167°C) , and that such compositions (B) and (C) were used.

### (Example 44)

A composition (A) was prepared by mixing 88 wt% of a propylene homopolymer having a melt flow rate (MFR) of 0.8 g/10 minutes (peak melting temperature = 160°C, melting completion temperature = 167°C) and 10 wt% of a high-density polyethylene, and by further adding thereto 2 wt% of calcium carbonate having an average grain size of 1.5 µm. A composition (B) was separately prepared by mixing an amorphous resin with a polyolefinic resin, both listed in Table 5, in an amount again listed in Table 5. The composition (C) was prepared by adding an inorganic fine powder listed in Table 5 in an amount again listed in Table 5 to a propylene homopolymer having a melt flow rate (MFR) of 4.0 g/10 minutes (peak melting temperature = 160°C , melting completion temperature = 167°C) . The compositions (A) , (B) and (C) were separately kneaded under fusion in the individual extruders set at 270°C, stacked in a single die so as to attain a stack constitution of (C) / (B) / (A) / (B) / (C) , co-extruded therefrom, and then cooled using a cooling apparatus to thereby obtain a non-stretched sheet. The sheet was then heated to 155°C, and stretched 5-fold in the longitudinal direction effected by difference in the peripheral speeds of a number of roller groups. The resultant five-layered stack was then heated to 175°C, and stretched 7.5-fold in the transverse direction using a tenter to thereby obtain a five-layered film. The surface of such five-layered film was subjected to corona discharge treatment to thereby obtain a five-layered stretched resin film having a constitution expressed as (C) / (B) / (A) / (B) / (C) (in 5 µm/5 µm/40 µm/5 µm/5 µm thick).

### (Example 45)

A composition (A) was prepared by mixing 87 wt% of a propylene homopolymer, having a melt flow rate (MFR) of 0.8 g/10 minutes (peak melting temperature = 160°C, melting completion temperature = 167°C) and 8 wt% of a high-density polyethylene, and by further adding thereto 5 wt% of calcium carbonate having an average grain si ze of 1.5 µm. A composition (B) was separately prepared by mixing an amorphous resin with a polyolefinic resin, both listed in Table 5, in amounts again listed in Table 5. The composition (C) was prepared by adding an inorganic fine powder listed in Table 5 in an amount again listed in Table 5 to a propylene homopolymer having a melt flow rate (MFR) of 4.0 g/10 minutes (peak melting temperature = 160 °C , melting completion temperature = 167°C). The compositions (A), (B) and (C) were separately kneaded under fusion in the individual extruders set at 270°C, co-extruded in a sheet form from a single die so as to attain a layer constitution of (C) / (B) / (A) / (B) / (C) , and then cooled using a cooling apparatus to thereby obtain a non-stretched sheet. The sheet was then heated to 155 °C , stretched 5-fold in the longitudinal direction effected by difference in the peripheral speeds of a number of roller groups. The surface of such five-layered film was subjected to corona discharge treatment to thereby obtain a five-layered stretched resin film having a constitution expressed as (C)/(B)/ (A)/ (B) / (C) (in 15 µm/15 µm/70 µm/15 µm/15 µm thick).

### (Test Example 2)

The multi-layered stretched resin films obtained in Examples 23 to 45 and Comparative Example 2 were subjected to measurements of porosity and opacity, and the offset printing suitability (curl height, waving after printing with a practical printing machine, and ink drying property) was evaluated according to the procedures described above in Test Example 1. Smoothness of the surface layer (C) was measured in compliance with JIS P-8119. Results were shown in Table 5.

**Table 5**

| | Stretching direction of layer (A) | Constitution of layer (B) | | | | | | | Constitution of layer (C) | | | Presence of layer (D) | Opacity of stretched film (%) | Offset printing suitability | | |
|---|---|---|---|---|---|---|---|---|---|---|---|---|---|---|---|---|
| | | Amorphous resin | | | Polyolefinic resin | | Stretching direction | porosity of layer (B) | Inorganic fine powder | | | | | Curl height (mm) | Waving after printing with practical printing machine | Ink drying property |
| | | Type | Glass transition temperature (°C) | Content Type (wt%) | | Content (wt%) | | | Type | Content (wt%) | Smoothness (sec) | | | | | |
| Example 23 | biaxial | a | 140 | 50 | α | 50 | uniaxial | 1 | A | 55 | 10,000 | no | 47 | 2 | O | 5 |
| Example 24 | biaxial | e | 105 | 20 | α | 80 | uniaxial | 0 | A | 55 | 10,000 | no | 37 | 0 | O | 5 |
| Example 25 | biaxial | e | 105 | 70 | α | 30 | uniaxial | 0 | A | 55 | 10,000 | no | 53 | 0 | O | 5 |
| Example 26 | biaxial | b | 125 | 50 | α | 50 | uniaxial | 0 | A | 55 | 10,000 | no | 45 | 0 | O | 5 |
| Example 27 | biaxial | c | 80 | 50 | α | 50 | uniaxial | 0 | A | 55 | 10,000 | no | 46 | 0 | O | 5 |
| Example 28 | biaxial | f | 105 | 50 | α | 50 | uniaxial | 0 | A | 55 | 10,000 | no | 43 | 0 | O | 5 |
| Example 29 | biaxial | g | 100 | 50 | α | 50 | uniaxial | 0 | A | 55 | 10,000 | no | 44 | 0 | O | 5 |
| Example 30 | biaxial | d | 160 | 20 | α | 80 | uniaxial | 3 | A | 55 | 10,000 | no | 49 | 4 | O | 5 |
| Example 31 | biaxial | e | 105 | 50 | α | 50 | uniaxial | 0 | A | 35 | 4,000 | no | 39 | 0 | O | 4 |
| Example 32 | biaxial | e | 105 | 50 | α | 50 | uniaxial | 0 | A | 45 | 7,000 | no | 41 | 0 | O | 5 |
| Example 33 | biaxial | e | 105 | 50 | α | 50 | uniaxial | 0 | A | 55 | 10,000 | no | 43 | 0 | O | 5 |
| Example 34 | biaxial | e | 105 | 50 | α | 50 | uniaxial | 0 | A | 65 | 13,000 | no | 45 | 0 | O | 5 |
| Example 35 | biaxial | e | 105 | 50 | α | 50 | uniaxial | 0 | B | 55 | 8,000 | no | 43 | 0 | O | 5 |
| Example 36 | biaxial | e | 105 | 50 | α | 50 | uniaxial | 0 | C | 45 | 5,000 | no | 41 | 0 | O | 5 |
| Example 37 | biaxial | e | 105 | 50 | α | 50 | uniaxial | 0 | D | 55 | 2,000 | no | 41 | 0 | O | 5 |
| Example 38 | biaxial | e | 105 | 50 | α | 50 | uniaxial | 0 | E | 55 | 1,000 | no | 42 | 0 | O | 5 |
| Example 39 | biaxial | e | 105 | 50 | α | 50 | uniaxial | 0 | F | 55 | 1,000 | no | 42 | 0 | O | 5 |
| Example 40 | biaxial | e | 105 | 50 | β | 50 | uniaxial | 0 | A | 55 | 10,000 | no | 45 | 1 | O | 5 |
| Example 41 | biaxial | c | 80 | 50 | β | 50 | uniaxial | 0 | A | 55 | 10,000 | no | 45 | 1 | O | 5 |
| Example 42 | biaxial | e | 105 | 50 | β γ | 25 25 | uniaxial | 0 | A | 55 | 10,000 | no | 45 | 1 | O | 5 |
| Example 43 | biaxial | e | 105 | 50 | α | 50 | uniaxial | 0 | A | 55 | 10,000 | yes | 61 | 0 | O | 5 |
| Example 44 | biaxial | e | 105 | 50 | α | 50 | biaxial | 0 | A | 55 | 10,000 | no | 27 | 0 | O | 5 |
| Example 45 | uniaxial | c | 80 | 50 | α | 50 | uniaxial | 0 | A | 55 | 10,000 | no | 51 | 0 | O | 5 |
| | | | | | | | | | | | | | | | | |
| Comparative Example 2 | biaxial | - | - | - | - | - | uniaxial | 30 | E | 3 | 4,000 | yes | 69 | 33 | × | 2 |

### Industrial Applicability

The multi-layered stretched resin film of the present invention is successfully exempt from being waved or curled due to vehicle contained in offset printing ink during offset printing. This ensures an excellent printing property of such multi-layered stretched resin film. The multi-layered stretched resin film having the surface layer (C) of the present invention is also excellent in ink drying property. The multi-layered stretched resin film is advantageous when used as a material for tracing paper, map, book cover, wrapping paper, book paper, sticker sheet, poster paper, menu sheet, hanging screen, label, shopping bag, cardboard, brochure, and illuminated sign board and so forth.

## Claims

1. A multi-layered stretched resin film comprising:
a base layer (A) containing a polyolefinic resin in an amount of more than 90 wt% and 100 wt% or less, and an inorganic fine powder having an average grain size of 0.01 to 10 µm or an organic filler in an amount of 0 wt% or more and less than 10 wt%; and
an amorphous resin-containing layer (B) provided at least on one side of such base layer (A) , and containing 0 to 85 wt% of a polyolefinic resin and 15 to 100 wt% of an amorphous resin;
said amorphous resin-containing layer (B) having a porosity of 5% or below.

2. The multi-layered stretched resin film as claimed in Claim 1, wherein said polyolefinic resin contained in the base layer (A) is a propylene homopolymer having a melting point of. 155 to 174 °C , melt flow rate of 0. 5 to 10 g/10 minutes, and crystallinity of 45 to 70%.

3. The multi-layered stretched resin film as claimed in Claim 1 or 2, wherein said base layer (A) has a thickness of 20 to 250 µm.

4. The multi-layered stretched resin film as claimed in any one of Claims 1 to 3, wherein said amorphous resin is a cycloolefinic resin.

5. The multi-layered stretched resin film as claimed in any one of Claims 1 to 4, herein said amorphous resin has a glass transition temperature of 170°C or below.

6. The multi-layered stretched resin film as claimed in Claim 5, wherein said amorphous resin has a glass transition temperature of 70 to 170°C.

7. The multi-layered stretched resin film as claimed in any one of Claims 1 to 6, wherein said polyolefinic resin contained in the amorphous resin-containing layer (B) is any resin selected from propylene-base resin, ethylene-base resin and mixtures thereof.

8. The multi-layered stretched resin film as claimed in any one of Claims 1 to 7; wherein the amorphous resin-containing layer (B) has a thickness of 1 to 100 µm.

9. The multi-layered stretched resin film as claimed in any one of Claims 1 to 8, further comprising a surface layer (C) containing 30 to 85 wt% of a polyolefinic resin and 15 to 70 wt% of an inorganic fine powder having an average grain size of 0.01 to 6 µm or an organic filler, said surface layer (C) being provided at least on one side of a stack which comprises said base layer (A) and said amorphous resin-containing layer (B) provided at least on one side thereof.

10. The multi-layered stretched resin film as claimed in Claim 9, wherein said surface layer (C) has a thickness of 1 to 100 µum.

11. The multi-layered stretched resin film as claimed in Claim 9 or 10, wherein the average dispersion grain size of the organic filler in said surface layer (C) is within a range from 0.01 to 6 µm.

12. The multi-layered stretched resin film as claimed in any one of Claims 9 to 11, wherein the inorganic fine powder or the organic filler in said surface layer (C) comprises calcium carbonate.

13. The multi-layered stretched resin film as claimed in Claim 12, wherein the inorganic fine powder or the organic filler in said surface layer (C) comprises surface-modified calcium carbonate.

14. The multi-layered stretched resin film as claimed in any one of Claims 9 to 13, wherein said surface layer (C) has a smoothness in compliance with JIS P-8119 of 20,000 seconds or less.

15. The multi-layered stretched resin film as claimed in any one of Claims 9 to 14, wherein a layer constitution given by said base layer (A), amorphous resin-containing layer (B) and surface layer (C) is expressed as (C) (B) / (A) (B) (C) , (C) / (B) (A) (B) , (C) / (B) (A) / (C) or (C) / (B) / (A) .

16. The multi-layered stretched resin film as claimed in any one of Claims 9 to 15, further comprising an intermediate layer (D) comprising a polypropylene-base resin containing 2 to 55 wt% of an inorganic fine powder having an average grain size of 0.01 to 10 µm, said intermediate layer (D) being provided between said base layer (A) and said amorphous resin-containing layer (B).

17. The multi-layered stretched resin film as claimed in any one of Claims 9 to 16, further comprising an intermediate layer (D) comprising a polypropylene-base resin containing 2 to 55 wt% of an inorganic fine powder, said intermediate layer (D) being provided between said base-layer (A) and said surface layer (C).

18. The multi-layered stretched resin film as claimed in any one of Claims 1 to 17 having a total thickness of 30 to 450 µm.

19. The multi-layered stretched resin film as claimed in any one of Claims 1 to 18 having an opacity in compliance with JIS P-8138 of less than 70%.

20. The multi-layered stretched resin film as claimed in any one of Claims 1 to 19 having at least on one side thereof a pigment coated layer as the outermost layer.

## Patentansprüche

1. Eine mehrschichtige gestreckte Harzfolie umfassend:
eine Grundschicht (A), enthaltendein polyolefinisches Harz in einer Menge von mehr als 90 Gew.% und 100 Gew.% oder weniger, und ein anorganisches feines Pulver, das eine mittlere Korngröße von 0,01 bis 10 µm aufweist, oder einen organischen Füllstoff in einer Menge von 0 Gew.% oder mehr und weniger als 10 Gew.%; und
eine amorphes Harz enthaltende Schicht (B), welche an mindestens einer Seite der Grundschicht (A) bereitgestellt ist, und 0 bis 85 Gew.% eines polyolefinischen Harzes und 15 bis 100 Gew.% eines amorphen Harzes enthält;
wobei die amorphes Harz enthaltende Schicht (B) eine Porosität von 5% oder weniger aufweist.

2. Die mehrschichtige gestreckte Harzfolie gemäß Anspruch 1, wobei das polyolefinische Harz, das in der Grundschicht (A) enthalten ist, ein Propylenhomopolymer mit einem Schmelzpunkt von 155 bis 174°C, einer Schmelzflussrate von 0,5 bis 10 g/ 10 Minuten und einer Kristallinität von 45 bis 70 % ist.

3. Die mehrschichtige gestreckte Harzfolie gemäß Anspruch 1 oder 2, wobei die Grundschicht (A) eine Dicke von 20 bis 250 µm aufweist.

4. Die mehrschichtige gestreckte Harzfolie gemäß einem der Ansprüche 1 bis 3, wobei das amorphe Harz ein cycloolefinisches Harz ist.

5. Die mehrschichtige gestreckte Harzfolie gemäß einem der Ansprüche 1 bis 4, wobei das amorphe Harz eine Glasübergangstemperatur von 170°C oder weniger aufweist.

6. Die mehrschichtige gestreckte Harzfolie gemäß Anspruch 5, wobei das amorphe Harz eine Glasübergangstemperatur von 70 bis 170°C aufweist.

7. Die mehrschichtige gestreckte Harzfolie gemäß einem der Ansprüche 1 bis 6, wobei das polyolefinisches Harz, das in der amorphes Harz enthaltenden Schicht (B) enthalten ist, ein beliebiges Harz ist, das aus Harz auf Propylen-Basis, Ethylen-Basis und Gemischen davon ausgewählt ist.

8. Die mehrschichtige gestreckte Harzfolie gemäß einem der Ansprüche 1 bis 7, wobei die amorphes Harz enthaltende Schicht (B) eine Dicke von 1 bis 100 µm aufweist.

9. Die mehrschichtige gestreckte Harzfolie gemäß einem der Ansprüche 1 bis 8, ferner umfassend eine Oberflächenschicht (C), enthaltend 30 bis 85 Gew.% eines polyolefinischen Harzes und 15 bis 70 Gew.% eines anorganischen feinen Pulvers, das eine mittlere Korngröße von 0,01 bis 6 µm aufweist, oder eines organischen Füllstoffs, wobei die Oberflächenschicht (C) an mindestens einer Seite eines Stapels bereitgestellt ist, welcher die Grundschicht (A) und die amorphes Harz enthaltende Schicht (B), bereitgestellt an wenigstens einer Seite davon, umfasst.

10. Die mehrschichtige gestreckte Harzfolie gemäß Anspruch 9, wobei die Oberflächenschicht (C) eine Dicke von 1 bis 100 µm aufweist.

11. Die mehrschichtige gestreckte Harzfolie gemäß Anspruch 9 oder 10, wobei die mittlere Dispersionskorngröße des organischen Füllstoffs in der Oberflächenschicht (C) in einem Bereich von 0,01 bis 6 µm liegt.

12. Die mehrschichtige gestreckte Harzfolie gemäß einem der Ansprüche 9 bis 11, wobei das anorganische feine Pulver oder der organische Füllstoff in der Oberflächenschicht (C) Calciumcarbonat umfasst.

13. Die mehrschichtige gestreckte Harzfolie gemäß Anspruch 12, wobei das anorganische feine Pulver oder der organische Füllstoff in der Oberflächenschicht (C) oberflächenmodifiziertes Calciumcarbonat umfasst.

14. Die mehrschichtige gestreckte Harzfolie gemäß einem der Ansprüche 9 bis 13, wobei die Oberflächenschicht (C) eine Glattheit, die mit JIS P-8119 übereinstimmt, von 20.000 Sekunden oder weniger aufweist.

15. Die mehrschichtige gestreckte Harzfolie gemäß einem der Ansprüche 9 bis 14, wobei eine Schichtanordnung gegeben durch die Grundschicht (A), amorphes Harz enthaltende Schicht (B) und Oberflächenschicht (C) durch (C)/(B)/(A)/(B)/(C), (C)/(B)/(A)/(B), (C)/(B)/(A)/(C) oder (C)/(B)/(A) dargestellt wird.

16. Die mehrschichtige gestreckte Harzfolie gemäß einem der Ansprüche 9 bis 15, ferner umfassend eine Zwischenschicht (D), umfassend ein Harz auf Polypropylen-Basis, enthaltend 2 bis 55 Gew.% eines anorganischen feinen Pulvers, das eine mittlere Korngröße von 0,01 bis 10 µm aufweist, wobei die Zwischenschicht (D) zwischen der Grundschicht (A) und der amorphes Harz enthaltenden Schicht (B) bereitgestellt wird.

17. Die mehrschichtige gestreckte Harzfolie gemäß einem der Ansprüche 9 bis 16, ferner umfassend eine Zwischenschicht (D), umfassend ein Harz auf Polyproplyen-Basis, enthaltend 2 bis 55 Gew.% eines anorganischen feinen Pulvers, wobei die Zwischenschicht (D) zwischen der Grundschicht (A) und der Oberflächenschicht (C) bereitgestellt wird.

18. Die mehrschichtige gestreckte Harzfolie gemäß einem der Ansprüche 1 bis 17, wobei die Harzfolie eine Gesamtdicke von 30 bis 450 µm aufweist.

19. Die mehrschichtige gestreckte Harzfolie gemäß einem der Ansprüche 1 bis 18, wobei die.Harzfolie eine Opakheit, die mit JIS P-8138 übereinstimmt, von weniger als 70% aufweist.

20. Die mehrschichtige gestreckte Harzfolie gemäß einem der Ansprüche 1 bis 19, wobei die Harzfolie auf mindestens einer Seite davon eine mit Pigment beschichtete Schicht als äußerste Schicht aufweist.

## Revendications

1. Film de résine étiré multicouches, comprenant :
une couche de base (A), contenant une résine polyoléfinique dans une quantité supérieure à 90 % en poids et 100 % en poids ou moins, et une poudre minérale fine ayant une granulométrie moyenne de 0,01 à 10 µm ou une charge organique dans une quantité de 0 % en poids ou plus et inférieure à 10 % en poids ; et
une couche contenant une résine amorphe (B), prévue sur au moins une face de cette couche de base (A), et contenant de 0 à 85 % en poids d'une résine polyoléfinique et de 15 à 100 % en poids d'une résine amorphe ;
ladite couche contenant une résine amorphe (B) ayant une porosité de 5 % ou moins.

2. Film de résine étiré multicouches selon la revendication 1, dans lequel ladite résine polyoléfinique présente dans la couche de base (A) est un homopolymère de propylène ayant un point de fusion de 155 à 174 °C, un indice de fluidité à chaud de 0,5 à 10 g/10 minutes et une cristallinité de 45 à 70 %.

3. Film de résine étiré multicouches selon la revendication 1 ou 2, dans lequel ladite couche de base (A) a une épaisseur de 20 à 250 µm.

4. Film de résine étiré multicouches selon l'une quelconque des revendications 1 à 3, dans lequel ladite résine amorphe est une résine cyclo-oléfinique.

5. Film de résine étiré multicouches selon l'une quelconque des revendications 1 à 4, dans lequel ladite résine amorphe a une température de transition vitreuse de 170 °C ou moins.

6. Film de résine étiré multicouches selon la revendication 5, dans lequel ladite résine amorphe a une température de transition vitreuse de 70 à 170 °C.

7. Film de résine étiré multicouches selon l'une quelconque des revendications 1 à 6, dans lequel ladite résine polyoléfinique présente dans la couche contenant une résine amorphe (B) est l'une quelconque parmi une résine à base de propylène, une résine à base d'éthylène et des mélanges de celles-ci.

8. Film de résine étiré multicouches selon l'une quelconque des revendications 1 à 7, dans lequel la couche contenant une résine amorphe (B) a une épaisseur de 1 à 100 µm.

9. Film de résine étiré multicouches selon l'une quelconque des revendications 1 à 8, comprenant en outre une couche de surface (C) contenant 30 à 85 % en poids d'une résine polyoléfinique et 15 à 70 % en poids d'une poudre minérale fine ayant une granulométrie moyenne de 0,01 à 6 µm, ou charge organique, ladite couche de surface (C) étant prévue sur au moins une face d'un empilement qui comprend ladite couche de base (A) et ladite couche contenant une résine amorphe (B) prévue sur au moins une face de celle-ci.

10. Film de résine étiré multicouches selon la revendication 9, dans lequel ladite couche de surface (C) a une épaisseur de 1 à 100 µm.

11. Film de résine étiré multicouches selon la revendication 9 ou 10, dans lequel la granulométrie de dispersion moyenne de la charge organique dans ladite couche de surface (C) est située dans une plage allant de 0,01 à 6 µm.

12. Film de résine étiré multicouches selon l'une quelconque des revendications 9 à 11, dans lequel la poudre minérale fine ou la charge organique dans ladite couche de surface (C) comprend du carbonate de calcium.

13. Film de résine étiré multicouches selon la revendication 12, dans lequel la poudre minérale fine ou la charge organique dans ladite couche de surface (C) comprend un carbonate de calcium modifié en surface.

14. Film de résine étiré multicouches selon l'une quelconque des revendications 9 à 13, dans lequel ladite couche de surface (C) a un lissé conforme à la norme JIS P-8119 de 20 000 secondes ou moins.

15. Film de résine étiré multicouches selon l'une quelconque des revendications 9 à 14, dans lequel une constitution de couche donnée par ladite couche de base (A), ladite couche contenant une résine amorphe (B) et ladite couche de surface (C) est exprimée sous la forme (C)/(B)/(A)/(B)/(C), (C)/(B)/(A)/(B), (C)/(B)/(A)/(C) ou (C)/(B)/(A).

16. Film de résine étiré multicouches selon l'une quelconque des revendications 9 à 15, comprenant en outre une couche intermédiaire (D) comprenant une résine à base de polypropylène contenant 2 à 55 % en poids d'une poudre minérale fine ayant une granulométrie moyenne de 0,01 à 10 µm, ladite couche intermédiaire (D) étant prévue entre ladite couche de base (A) et ladite couche contenant une résine amorphe (B).

17. Film de résine étiré multicouches selon l'une quelconque des revendications 9 à 16, comprenant en outre une couche intermédiaire (D) comprenant une résine à base de polypropylène contenant 2 à 55 % en poids d'une poudre minérale fine, ladite couche intermédiaire (D) étant prévue entre ladite couche de base (A) et ladite couche de surface (C).

18. Film de résine étiré multicouches selon l'une quelconque des revendications 1 à 17, ayant une épaisseur totale de 30 à 450 µm.

19. Film de résine étiré multicouches selon l'une quelconque des revendications 1 à 18, ayant une opacité conforme à la norme JIS P-8138 de moins de 70 %.

20. Film de résine étiré multicouches selon l'une quelconque des revendications 1 à 19, ayant au moins sur une face de celui-ci une couche revêtue d'un pigment en tant que couche la plus extérieure.
